(19) Europäisches Patentamt
European Patent Office
Office européen des brevets

(11) **EP 1 834 398 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **05801677.5**

(22) Anmeldetag: **03.11.2005**

(51) Int Cl.:
***H02K 23/30*** *(2006.01)*     *H02K 3/28* *(2006.01)*

(86) Internationale Anmeldenummer:
**PCT/EP2005/055718**

(87) Internationale Veröffentlichungsnummer:
**WO 2006/069842 (06.07.2006 Gazette 2006/27)**

(54) **HERSTELLUNGSVERFAHREN EINER LÄUFERWICKLUNG FÜR EINE ELEKTRISCHE MASCHINE**

MANUFACTURING METHOD OF A ROTOR WINDING FOR AN ELECTRIC MACHINE

PROCÈDE DE FABRICATION D'UN ENROULEMENT ROTORIQUE POUR UNE MACHINE ÉLECTRIQUE

(84) Benannte Vertragsstaaten:
**DE FR IT**

(30) Priorität: **27.12.2004 DE 102004062813**

(43) Veröffentlichungstag der Anmeldung:
**19.09.2007 Patentblatt 2007/38**

(73) Patentinhaber: **Robert Bosch GmbH
70442 Stuttgart (DE)**

(72) Erfinder: **ROOS, Gerald
77855 Sasbachried (DE)**

(56) Entgegenhaltungen:
**EP-A- 1 489 724      WO-A- 02/21665
JP-A- H11 341 722      JP-A- 2000 341 892**

• **PATENT ABSTRACTS OF JAPAN Bd. 2000, Nr. 15, 6. April 2001 (2001-04-06) -& JP 2000 341892 A (ASMO CO LTD), 8. Dezember 2000 (2000-12-08)**
• **PATENT ABSTRACTS OF JAPAN Bd. 2000, Nr. 03, 30. März 2000 (2000-03-30) -& JP 11 341722 A (ASMO CO LTD; DENSO CORP), 10. Dezember 1999 (1999-12-10)**

**Beschreibung**

Stand der Technik

Die Erfindung betrifft ein Verfahren zur Herstellung der Läuferwicklung einer elektrischen Maschine nach der Gattung des Anspruchs 1 sowie eine elektrische Maschine mit einer nach diesem Verfahren hergestellten Läuferwicklung nach der Gattung des Anspruchs 16.

Aus der Druckschrift DE 197 57 279 C1 ist es bekannt, bei einem vierpoligen Elektromotor einen Kommutatorläufer mit 12 Kommutatorlamellen und 12 daran angeschlossene Spulen zu verwenden, um eine geringe Momentenwelligkeit und eine gute Kommutierung zu erzielen. Dabei sind die einander diametral gegenüberliegenden Lamellen über Kontaktbrücken miteinander verbunden, um die Stromversorgung des Läufers symmetrisch zu gestalten und mit nur einem Bürstenpaar sicherzustellen. Bei derartigen Maschinen wird der Läuferstrom nicht auf zwei Spulenstränge sondern aufgrund der Kontaktbrücken auf vier Spulenstränge aufgeteilt mit dem Nachteil, dass je Spulenstrang nur halb so viel Spulen in Reihe geschaltet sind. Damit wird die Kommutierungspannung an den Spulen entsprechend vergrößert. Dies hat einen höheren Verschleiß der Kohlebürsten am Kommutator und somit eine entsprechend begrenzte Lebensdauer beziehungsweise Standzeit des Motors zur Folge. Außerdem werden die Spulen des Läufers über jeweils drei Polzähne gewickelt, so dass sich ihre Wickelköpfe an den Stirnseiten des Läufers kreuzen. Dies führt zu einer großen Ausladung der Wickelköpfe sowie zu langen Wickelkopf-Verbindungen der Spulen, die sowohl Material aufwendig sind als auch zu hohen Wärmeverlusten führen.

Aus der Druckschrift US-PS 4,532,449 ist ferner eine vierpolige elektrische Maschine mit einem Kommutatorläufer bekannt, bei dem die Anzahl der Läuferspulen nur noch halb so groß ist wie die Anzahl der Kommutatorlamellen. Dort werden fünf Spulen von einem Bürstenpaar über 10 Lamellen versorgt. Die Spulen werden dabei als Einzelzahnwicklungen durchgewickelt, in dem jeweils von einer zur nächsten Spule ein Polzahn übersprungen wird. Anfang und Ende der Spulen werden jeweils mit Lamellen kontaktiert, zwischen denen je eine Lamelle frei bleibt. Diese freien Lamellen werden zur Stromversorgung der Spulen über Kontaktbrücken mit den ihnen gegenüberliegenden Lamellen verbunden, die mit den Spulen in Verbindung stehen. Diese Lösung hat den Nachteil, dass durch eine erhöhte Lamellenspannung bei fünf statt zwölf Spulen ein verstärktes Bürstenfeuer auftritt, welches die Lebensdauer des Kommutators und damit auch die Standzeit der Maschine beeinträchtigt.

Mit der vorliegenden Lösung wird angestrebt, bei hochpoligen elektrischen Maschinen mit Einzelzahnspulen die Kommutierung und damit die Lebensdauer der Maschine zu verbessern.

Vorteile der Erfindung

Das Verfahren zur Herstellung der Läuferwicklung einer elektrischen Maschine mit den kennzeichnenden Merkmalen des Anspruchs 1 hat den Vorteil, dass die auf den Polzähnen gleichmäßig verteilt aufgewickelten Einzelzahnspulen im Hinblick auf die Polteilung des Stators eine Lage mit möglichst kleinem elektrischen Winkelfehler einnehmen. Dadurch lassen sich die Kommutierungsverluste sowie radial wirkende Kraftanregungen am Läufer minimieren und damit Maschinenstandzeiten erhöhen. Außerdem werden durch die Verwendung von Einzelzahnspulen ausladende und lange Wickelkopf-Verbindungen vermieden. Durch die gleichgroße gerade Anzahl von Spulen und Kommutatorlamellen werden die Spulen nur auf zwei Zweige gleichmäßig verteilt.

Um für die Einzelzahspulen jeweils im Hinblick auf die Polteilung des Stators die optimale Lage zu finden, wird vorgeschlagen, dass für jeweils die nächste zu wickelnde Spule zunächst für jeden der Polzähne des Läufers der auf eine Polteilung bezogene elektrische Winkelfehler zum vorgegebenen Winkelversatz ermittelt wird, dass sodann die Absolutwerte der ermittelten Winkelfehler miteinander verglichen werden und dass durch diesen Vergleich derjenige Polzahn mit dem kleinsten elektrischen Winkelfehler ermittelt und die nächste Spule später auf diesen Polzahn gewickelt wird. Dazu wird in Weiterbildung der Erfindung vorgeschlagen, dass für jeden Polzahn der elektrische Winkelfehler Wf vorzugsweise als Cosinuswert des sich periodisch zur Polpaarzahl wiederholenden Winkelfehlers jeweils nach folgender Gleichung ermittelt wird:

$$Wf(j) = \cos 2\pi * p/z * (j-La/M),$$

wobei der Multiplikator M = s/z die Anzahl der Spulen pro Polzahn, s die Anzahl der Spulen insgesamt, z die Anzahl der Polzähne und j der jeweilige Polzahn ist. Zur Ermittlung des kleinsten Winkelfehlers gegenüber dem vorgegebenen Winkelversatz ist es bei Verwendung elektronischer Rechner einfacher, wenn jeweils die Cosinuswerte der elektrischen Winkelfehler ermittelt und miteinander verglichen werden, wobei die nächste Einzelzahnspule auf den Polzahn mit dem größten absoluten Cosinuswert als Winkelfehler gewickelt wird. Dabei kann außerdem zugleich der Wickelsinn der Spulen durch das Vorzeichen des Winkelfehler-Cosinuswertes bestimmt werden. Da aufgrund der Vielzahl von Polzähnen gleichgroße Winkelfehler für mehrere Polzähne ermittelt werden können, wird zur Erzielung kurzer Verbindungen zwischen den Lamellen und den Spulen vorgeschlagen, die Einzelzahnspulen jeweils auf den Polzahn aufzuwickeln, der im Bereich zwischen der Anfangslamelle und der Endlamelle der Spulen liegt. Um eine gleichmäßige Verteilung der Einzelzahnspulen auf allen Polzähnen zu erzielen, ist ferner vorgesehen, dass jede Einzelzahnspule auf den nächsten Polzahn gewickelt wird, der noch nicht die vorbestimmte Anzahl von Spulen trägt.

Durch die in den Unteransprüchen aufgeführten Maßnahmen ergeben sich vorteilhafte Ausgestaltungen und Weiterbildungen der im Hauptanspruch angegebenen Merkmale.

So ergibt sich eine einfache und kostengünstige Herstellung der Läuferwicklung dadurch, dass mehrere, vorzugsweise alle Einzelzahnspulen nacheinander durchgewickelt werden und dass Anfang und Ende der Einzelzahnspulen als eine Art Wellenwicklung in ein und dieselbe Wickelrichtung mit der Lamellenschrittweite an den jeweiligen Kommutatorlamellen kontaktiert werden, wobei jeweils die Endlamelle der vorherigen Spule die Anfangslamelle für die nächste zu wickelnde Einzelzahnspule bildet. In vorteilhafter Weise wird dabei die Lamellenschrittweite Y der Einzelzahnspulen in Abhängigkeit von der Lamellenzahl l und der Polpaarzahl p des Stators so vorgegeben, dass sie die Gleichung $|Y - l/p|$ ≤ 0,5 erfüllt. Des Weiteren wird in einfacher Weise das Ende der ersten Einzelzahnspule mit derjenigen Lamelle kontaktiert, die zuvor nach der Gleichung $Le1 = (La1+Y)$modular $l$ ermittelt wurde, wobei diese Lamelle für die nächste zu wickelnde Einzelzahnspule die Lamelle La2 für deren Spulenanfang bildet. Danach wird jede weitere Spule mit der Lamellenschrittweite Y mit den Lamellen des Kommutators kontaktiert wird.

Um auf der Kommutatorseite des Läufers 13 längere Verbindungen zwischen den Lamellen und den Spulen zu vermeiden, wird vorgeschlagen, den Wickeldraht zwischen der Anfangs- oder Endlamelle und einer Spule zwischen zwei näher gelegene Polzähne hindurch zur Ankerrückseite und von dort insbesondere zwischen zwei weitere Polzähne hindurch zur Vorderseite zurück und dann zur Spule bzw. zur Lamelle zu führen.

Zur Realisierung der aufgeführten Verfahrensschritte ist vorgesehen, dass die Anfangs- und Endlamelle sowie der Polzahn und der Wickelsinn der Spulen von einem Rechner in Form einer Wickeltabelle ermittelt werden, dass die Wickeltabelle sodann in einen Wickelautomaten eingegeben und von diesem beim Wickeln der Spulen abgearbeitet wird.

In zweckmäßiger Anwendung der Erfindung wird für eine sechspolige elektrische Maschine vorgeschlagen, dass auf deren Läufer von einem Wickelautomaten 20 Einzelzahnspulen nacheinander auf 10 Polzähne durchgewickelt und bei einer Lamellenschrittweite von 7 Lamellen mit 20 Lamellen seines Kommutators kontaktiert werden.

Für eine vierpolige elektrische Maschine wird vorgeschlagen, dass auf deren Läufer von einem Wickelautomaten 15 Einzelzahnspulen nacheinander auf 5 Polzähne durchgewickelt und bei einer Lamellenschrittweite von 8 Lamellen mit 15 Lamellen seines Kommutators kontaktiert werden.

Für eine achtpolige elektrische Maschine wird vorgeschlagen, dass auf deren Läufer von einem Wickelautomaten 27 Einzelzahnspulen nacheinander auf 9 Polzähne durchgewickelt und bei einer Lamellenschrittweite von 7 Lamellen mit 27 Lamellen seines Kommutators kontaktiert werden.

Für eine zehnpolige elektrische Maschine wird vorgeschlagen, dass auf deren Läufer von einem Wickelautomaten 24

Einzelzahnspulen nacheinander auf 12 Polzähne durchgewickelt und bei einer Lamellenschrittweite von 5 Lamellen mit 24 Lamellen seines Kommutators kontaktiert werden.

Zeichnung

Die Erfindung wird im Folgenden beispielhaft anhand der Figuren näher erläutert. Es zeigen:

Figur 1 eine schematische Darstellung der erfindungsgemäßen elektrische Maschine in der Vorderansicht,
Figur 2 die Abwicklung der Maschine aus Figur 1 in schematischer Darstellung mit einer ersten Einzelzahnspule;
Figur 3 zeigt in einem ersten Ausführungsbeispiel die nach dem erfindungsgemäßen Verfahren erstellte Wickeltabelle und
Figur 4 zeigt in schematischer Darstellung die Herstellung der Läuferwicklung nach der Wickeltabelle gemäß Figur 3 in vier Abschnitten a) - d).
Figur 5 zeigt die Wickeltabelle für ein zweites Ausführungsbeispiel,
Figur 6 zeigt die schematische Darstellung der Maschine mit der Herstellung der ersten vier Spulen nach der Wickeltabelle gemäß Figur 5.
Figur 7 zeigt die Wickeltabelle für ein drittes Ausführungsbeispiel und
Figur 8 die elektrische Maschine in schematischer Darstellung mit den ersten vier Spulen, hergestellt nach der Wickeltabelle gemäß Figur 7.
Figur 9 zeigt die Wickeltabelle für ein viertes Ausführungsbeispiel und
Figur 10 die elektrische Maschine in schematischer Darstellung mit den ersten vier Spulen, hergestellt nach der Wickeltabelle gemäß Figur 9.

Beschreibung der Ausführungsbeispiele

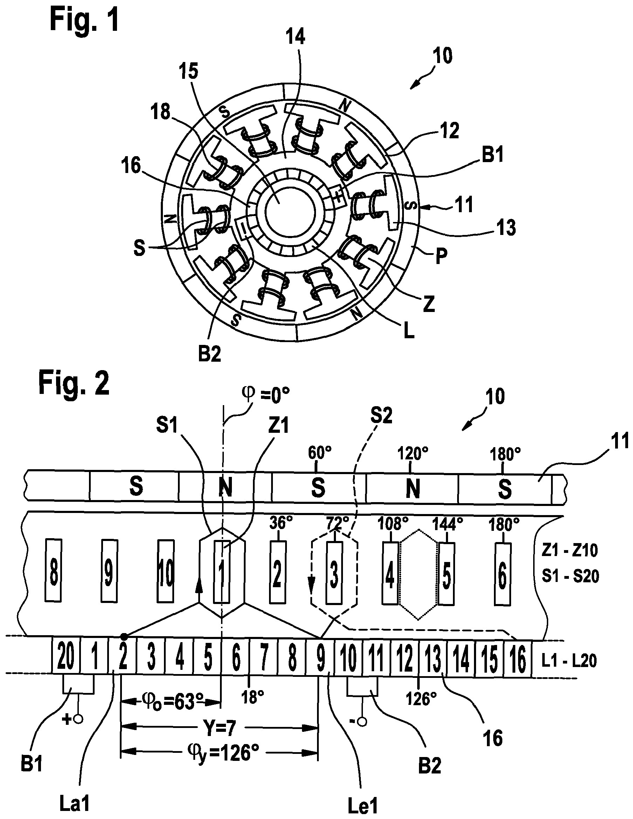

In Figur 1 ist für ein erstes Ausführungsbeispiel ein permanent magnetisch erregter sechspoliger Gleichstrommotor als elektrische Maschine in der Vorderansicht schematisch dargestellt und mit 10 bezeichnet. Derartige Maschinen werden bevorzugt für Stellantriebe, Gebläse und dergleichen in Kraftfahrzeuge eingesetzt und müssen bei hohen Belastungen möglichst über die ganze Lebensdauer des Fahrzeugs zuverlässig arbeiten. Dementsprechend muss ihr Aufbau möglichst robust sein. Die elektrische Maschine 10 hat einen sechspoligen Stator 11, der über einen Arbeitsluftspalt 12 mit einem Kommutatorläufer 13, nachfolgend Läufer genannt, zusammenwirkt. Der Läufer 13 besteht aus einem Blechpaket 14, dass auf einer beidseitig gelagerten Läuferwelle 15 befestigt ist. Am Umfang des Blechpaktes 14 sind zehn gleichmäßig verteilte Polzähne Z angeordnet, zwischen denen jeweils Nuten zur Aufnahme von insgesamt zwanzig Spulen S einer Läuferwicklung 18 ausgebildet sind. Die Spulen S sind dabei als Einzelzahnspulen paarweise um je einen Polzahn Z durch Wickelautomaten hergestellt. Die Spulen S werden dabei in besonderer Weise mit einem an der vorderen Stirnseite des Blechpaktes 14 auf die Läuferwelle 15 aufgesetzten Kommutator 16 verschaltet. Der Kommutator 16 hat zwanzig über den Umfang gleichmäßig verteilt angeordnete Lamellen L, die mit zwei ortsfesten Kohlebürsten B1 und B2 zusammenwirken. Die Kohlebürsten sind um 180° gegeneinander versetzt und werden zum Betrieb der elektrischen Maschine mit Gleichstrom versorgt. Die zehn Polzähne Z des Läufers 13 wirken dabei mit drei Erregerpolpaaren p des Stators 11 zusammen. Um eine möglichst geringe Drehmomentenwelligkeit der elektrischen Maschine zu bekommen, weicht die Anzahl der Polzähne von der Anzahl der Erregerpole ab.

Figur 2 zeigt in schematischer Darstellung eine Abwicklung des Gleichstrommotors 10 aus Figur 1, mit der das Wickelverfahren zur Herstellung und Anordnung der Spulen S auf den Polzähnen Z des Läufers 13 im Folgenden näher erläutert wird. Erkennbar ist dort der sechspolige Stator 11, die zehn Polzähne Z1 bis Z10, die erste Einzelzahnspule S1 und die zwanzig Lamellen L1 bis L20 des Kommutators 16. Die Anordnung der ersten Spule ist frei wählbar und wird hier dem ersten Polzahn Z1 zugeordnet. Ferner wird der erste Polzahn Z1 mit der ersten Spule S1 hier der Mitte eines Nordpols des Stators 11 zugeordnet. Auch diese Zuordnung ist frei wählbar. Außerdem wird die ebenfalls frei wählbare Zuordnung der Kommutatorlamellen L zu den Polzähnen Z hier so gewählt, dass der erste Polzahn Z1 genau in Höhe des Lamellenschlitzes zwischen den Lamellen L5 und L6 des Kommutators 16 liegt. Diese Position soll nunmehr gemäß Figur 2 am Umfang die Winkellage von $\varphi = 0°$ haben. Daraus ergibt sich, dass der benachbarte Südpol des Stators 11 auf der Position von 60° liegt, dass der benachbarte Polzahn Z2 auf der Position von 36° liegt und dass der nächste Lamellenschlitz sich auf der Position von 18° befindet. Des Weiteren wird festgelegt, dass sämtliche Spulen S mit ihrem Anfang jeweils an einer Anfangslamelle La und mit ihrem Ende an einer Endlamelle Le kontaktiert werden. Gemäß Figur 2 bildet die Lamelle L2 für die erste Spule S1 die frei wählbare Anfangslamelle La1. Durch die hier gewählte Anordnung der Position der Lamelle L2 ergibt sich folglich zwischen der Anfangslamelle La1 der Spule S1 und dem für diese Spule vorgesehen Polzahn Z1 ein Winkelversatz $\varphi_0$ von 63°. In Figur 2 befindet sich die optimale Lage der Spule S1 mitten unter einem Pol (Nordpol) des Stators 11. Diese Position hat einen Winkelfehler Wf = 0°.

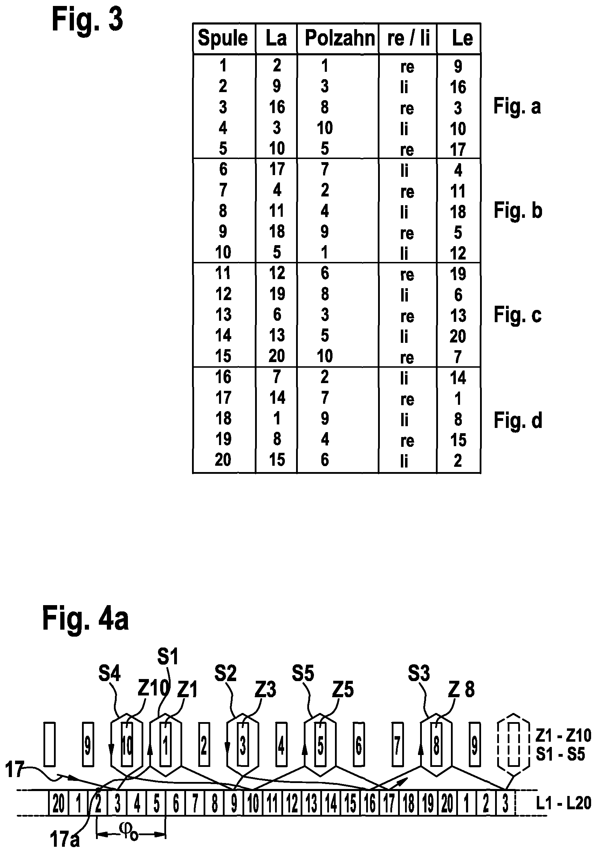

Um die Einzelzahnspulen S nach Art einer Wellenwicklung durchgehend auf die Polzähne Z wickeln zu können, wird für alle Spulen S eine Lamelleschrittweite Y festgelegt, die sicherstellt, dass das Ende einer jeden Spule mit einer freien Lamelle L kontaktiert wird. In Figur 2 ist eine Lamelleschrittweite Y von sieben Lamellen vorgesehen, das heißt: Y = 7. Zur Erstellung einer Wickeltabelle gemäß Figur 3 nach dem erfindungsgemäßen Verfahren werden zunächst folgende Definitionen getroffen:

p = Polpaarzahl
z = Zähnezahl
l = Lamellezahl
s = Spulenzahl
M = Multiplikator = l/z = s/z
Y = Lamelleschrittweite
Wf = Winkelfehler (Abweichung von der optimalen Lage der Spulen S)
Wz = Windungszahl der Spulen S
i = die jeweilige Spule 1,2,3...s
j = der jeweilige Polzahn 1,2,3...z

Des Weiteren müssen zur Erstellung eines Winkelschemas noch folgende Bedingungen zutreffen:

$$p > 1$$

$$p < z < 4p$$

$z \neq 2p$ und $z \neq 3p$

$$M > 1$$

$M \neq$ ganzzahlige Vielfache von $p$
$M \neq$ ganzzahlige Teiler von $p$

$$l = s = M * z$$

$$|Y-l/p| \leq 0,5$$

Alle Spulen werden mit je einer Anfangslamelle La und einer Endlamelle Le kontaktiert. Dabei ergeben sich nach der freien Festlegung der ersten Anfangslamelle La1 für alle Spulen i die Anfangs- und Endlamellen nach der Gleichung:

$$(1) \quad Lai = La1 + [(i - 1) \times Y] \bmod l \quad (mod = modular)$$

und

$$Lei = (Lai + Y) \bmod l.$$

Der modulare Wertebereich für die Lamellen l liegt bei diesem Beispiel mit 20 Lamellen zwischen 1 und 20.

Für jede weitere Spule S des Stators 11 wird dann in einem ersten Durchgang für jeden Polzahn Z der Winkelfehler Wf zur optimalen Lage bezüglich Drehmomentenbildung und Bürstenfeuerminimierung ermittelt, und zwar ausgehend von der ersten Spule S1 mit dem Winkelfehler 0°. Für die in Figur 2 gestrichelt dargestellte Spule 2 wäre demzufolge die optimale Lage mit dem Winkelversatz $\varphi$o von 63° zur Anfangslamelle L9 eine Position zischen den Polzähnen Z4 und Z5, wie sie dort gepunktet angedeutet ist. Weitere optimale Positionen liegen jeweils um eine Polteilung (360°/2p), also um je 60° zueinander versetzt. Die für die Spule 2 zur Verfügung stehenden Polzähne haben jedoch eine hier als Winkelfehler bezeichnete Abweichung zu den optimalen auf die Polteilung der Maschine bezogenen Positionen. Daher muss für jede Spule der Polzahn mit der geringsten Abweichung zu einer der optimalen Lagen gefunden werden. Zur Vereinfachung der Berechnung wird dabei jeweils der Cosinuswert des periodischen, auf ein Polpaar bezogenen elektrischen Winkelfehlers jeder weiteren Spule für jeden Polzahn ermittelt nach der Gleichung:

$$(2) \quad Wf(j) = \cos [2\pi * p/z * (j-Lai/M)]$$

In einem weiteren Durchgang werden dann die ermittelten Winkelfehler Wf der Spule i auf den Zähnen j miteinander verglichen, um den Polzahn Z oder die Polzähne Z mit dem größten Cosinuswert der Winkelfehler Wf zu ermitteln. Dies erfolgt nach der Gleichung:

$$(3) \quad |Wf(j)| = Wfmax; Wfmax = \max(|Wf(1)|,|Wf(2)|,|Wf(3)|,\ldots)$$

wobei Wfmax der größte zuvor ermittelte Vergleichswert für die Spule i ist.

Das Vorzeichen der nach der Gleichung (2) ermittelten Winkelfehler Wf gibt an, ob die optimale Lage der Spule sich auf einen Nordpol oder einen Südpol des Stators bezieht. Dabei wird festgelegt, dass -ausgehend von der ersten Spule S1- bei einem positiven Cosinuswert die Spulen S gleichsinnig rechts herum gewickelt werden. Daraus ergibt sich für jede Spule i im Hinblick auf den für sie ermittelten Polzahn Z, dass bei einem negativen Cosinuswert des Winkelfehlers Wf(j) der Wickelsinn der Spule geändert wird, die Spule also entgegen dem Wickelsinn der ersten Spule links herum auf den ausgewählten Zahn Z gewickelt werden muss.

Für den Gleichstrommotor 10 nach Figur 1 wird nunmehr mit Hilfe der Gleichungen (1), (2) und (3) eine in Figur 3 dargestellte Wickeltabelle erstellt, wobei die erste Spule S1 gemäß Figur 2 auf dem Polzahn Z1 angeordnet wird. Da die Berechnung der Winkelfehler mittels eines Computers erfolgt, werden die Gleichungen (2) und (3) auch für die erste Spule angewandt.

Für das erste Ausführungsbeispiel gilt:

| | |
|---|---|
| Polpaarzahl | p = 3 |
| Polzähnezahl | z = 10 |
| Lamellenzahl | l = 20 |
| Spulenzahl | s = 20 |
| Multiplikator | M = 2 |
| Lamellenschrittweite | Y = 7 |
| Windungszahl | Wz = 11 |

Mit diesen Werten sind die zuvor aufgezählten Bedingungen erfüllt. Mit den beiden Gleichungen (1) wird nun für jede Spule Li die Anfangslamelle Lai und Endlamelle Lei festgelegt.

Spulenkontaktierung am Kommutator:

$$\text{Lai} = (\text{La1}+[(i-1)*Y])\bmod 20; \quad \text{Lei} = (\text{Lai}+Y)\bmod 20$$

| | | |
|---|---|---|
| Spule 1 : | La 1=(2+(1-1)*7)mod20= 2; | Le 1=(2+7)mod20= 9 |
| Spule 2 : | La 2=(2+(2-1)*7)mod20= 9; | Le 2=(9+7)mod20=16 |
| Spule 3 : | La 3=(2+(3-1)*7)mod20=16; | Le 3=(16+7)mod20= 3 |
| Spule 4 : | La 4=(2+(4-1)*7)mod20= 3; | Le 4=(3+7)mod20=10 |
| Spule 5 : | La 5=(2+(5-1)*7)mod20=10; | Le 5=(10+7)mod20=17 |
| Spule 6 : | La 6=(2+(6-1)*7)mod20=17; | Le 6=(17+7)mod20= 4 |
| Spule 7 : | La 7=(2+(7-1)*7)mod20= 4; | Le 7=(4+7)mod20=11 |
| Spule 8 : | La 8=(2+(8-1)*7)mod20=11; | Le 8=(11+7)mod20=18 |
| Spule 9 : | La 9=(2+(9-1)*7)mod20=18; | Le 9=(18+7)mod20= 5 |
| Spule 10: | La10=(2+(10-1)*7)mod20= 5; | Le10=(5+7)mod20=12 |
| Spule 11: | La11=(2+(11-1)*7)mod20=12; | Le11=(12+7)mod20=19 |
| Spule 12: | La12=(2+(12-1)*7)mod20=19; | Le12=(19+7)mod20= 6 |
| Spule 13: | La13=(2+(13-1)*7)mod20= 6; | Le13=(6+7)mod20=13 |
| Spule 14: | La14=(2+(14-1)*7)mod20=13; | Le14=(13+7)mod20=20 |
| Spule 15: | La15=(2+(15-1)*7)mod20=20; | Le15=(20+7)mod20= 7 |
| Spule 16: | La16=(2+(16-1)*7)mod20= 7; | Le16=(7+7)mod20=14 |
| Spule 17: | La17=(2+(17-1)*7)mod20=14; | Le17=(14+7)mod20= 1 |
| Spule 18: | La18=(2+(18-1)*7)mod20= 1; | Le18=(1+7)mod20= 8 |
| Spule 19: | La19=(2+(19-1)*7)mod20= 8; | Le19=(8+7)mod20=15 |
| Spule 20: | La20=(2+(20-1)*7)mod20=15; | Le20=(15+7)mod20= 2 |

Winkelfehlerermittlung:

Für jede Spule S wird nun für alle Polzähne Z der jeweilige Winkelfehler Wf nach der Gleichung (2) ermittelt.

Winkelfehler der Spule 1

$$\text{Wf}(j) = \cos\left[2\pi \times p/z \times (j-\text{Lai}/M)\right]$$

$$\text{Zahn 1: Wf}(1) = \cos\left[2\pi \times 3/10 \times (1-2/2)\right] = 1,0$$

```
Zahn 2:  Wf(2) = cos [2π x 3/10 x (2-2/2)] = -0,309

Zahn 3:  Wf(3) = cos [2π x 3/10 x (3-2/2)] = -0,809

Zahn 4:  Wf(4) = cos [2π x 3/10 x (4-2/2)] =  0,809

Zahn 5:  Wf(5) = cos [2π x 3/10 x (5-2/2)] =  0,309

 Zahn 6:  Wf(6) = cos [2π x 3/10 x (6-2/2)] = -1,0

Zahn 7:  Wf(7) = cos [2π x 3/10 x (7-2/2)] =  0,309

Zahn 8:  Wf(8) = cos [2π x 3/10 x (8-2/2)] =  0,809

Zahn 9:  Wf(9) = cos [2π x 3/10 x (9-2/2)] = -0,809

Zahn 10: Wf(10)= cos [2π x 3/10 x(10-2/2)] = -0,309
```

Im nächsten Durchgang wird nun mit der Gleichung (3) für die Spule 1 derjenige Polzahn mit dem geringsten Winkelfehler Wf bzw. mit dem größten Winkelfehler-Cosinuswert Wfmax ermittelt.

$$\text{Wfmax} = \text{max}(|\text{Wf}(1)|,|\text{Wf}(2)|,|\text{Wf}(3)|,\ldots) = 1,0$$

Winkelfehler-Vergleich

| | | |
|---|---|---|
| \|Wf(1)\| = Wfmax: | 1,0 = 1,0: | Bedingung erfüllt |
| \|Wf(2)\| = Wfmax: | 0,309 ≠ 1,0: | Bedingung nicht erfüllt. |
| \|Wf(3)\| = Wfmax: | 0,809 ≠ 1,0: | Bedingung nicht erfüllt. |
| \|Wf(4)\| = Wfmax: | 0,309 ≠ 1,0: | Bedingung nicht erfüllt. |
| \|Wf(5)\| = Wfmax: | 0,809 ≠ 1,0: | Bedingung nicht erfüllt. |
| \|Wf(6)\| = Wfmax: | 1,0 = 1,0: | Bedingung erfüllt. |
| \|Wf(7)\| = Wfmax: | 0,309 ≠ 1,0: | Bedingung nicht erfüllt. |
| \|Wf(8)\| = Wfmax: | 0,809 ≠ 1,0: | Bedingung nicht erfüllt. |
| \|Wf(9)\| = Wfmax: | 0,809 ≠ 1,0: | Bedingung nicht erfüllt. |
| \|Wf(10)\| = Wfmax: | 0,309 ≠ 1,0: | Bedingung nicht erfüllt. |

Da hier mehrere Polzähne (Z1 und Z6) den gleichen geringsten absoluten Winkelfehler aufweisen, wird von diesen Polzähnen derjenige Polzahn Z ausgewählt, der im Bereich zwischen Anfangslamelle La und Endlamelle Le der Spule S liegt. Außerdem wird geprüft, ob für den ausgewählten Zahn Z bereits die vorbestimmte Anzahl M von Spulen S ausgewählt wurde.

Ergebnis des Vergleichs:

Die Spule 1 kann auf Zahn 1 gewickelt werden. Der ermittelte Wert ist positiv, so dass die Spule 1 rechts herum gewickelt wird. Damit ist die erste Zeile der Wickeltabelle in Figur 3 festgelegt.

Die gleichen Berechnungen werden nun nach der Gleichung (2) für die Spule 2 mit der Anfangslamelle La2 = 9 durchgeführt.

Winkelfehler der Spule 2:

$$Wf(j) = \cos [2\pi \times p/z \times (j-Lai/M)]$$

$$\text{Zahn 1: } Wf(1) = \cos [2\pi \times 3/10 \times (1-9/2)] = 0,951$$

$$\text{Zahn 2: } Wf(2) = \cos [2\pi \times 3/10 \times (2-9/2)] = 0,000$$

$$\text{Zahn 3: } Wf(3) = \cos [2\pi \times 3/10 \times (3-9/2)] = -0,951$$

$$\text{Zahn 4: } Wf(4) = \cos [2\pi \times 3/10 \times (4-9/2)] = 0,588$$

$$\text{Zahn 5: } Wf(5) = \cos [2\pi \times 3/10 \times (5-9/2)] = 0,588$$

$$\text{Zahn 6: } Wf(6) = \cos [2\pi \times 3/10 \times (6-9/2)] = -0,951$$

$$\text{Zahn 7: } Wf(7) = \cos [2\pi \times 3/10 \times (7-9/2)] = 0,000$$

$$\text{Zahn 8: } Wf(8) = \cos [2\pi \times 3/10 \times (8-9/2)] = 0,951$$

$$\text{Zahn 9: } Wf(9) = \cos [2\pi \times 3/10 \times (9-9/2)] = -0,588$$

$$\text{Zahn 10: } Wf(10) = \cos [2\pi \times 3/10 \times (10-9/2)] = -0,588$$

Im nächsten Durchgang wird nun mit der Gleichung (3) für die Spule 2 derjenige Polzahn mit dem geringsten Winkelfehler Wf bzw. mit dem größten Winkelfehler-Cosinuswert Wfmax ermittelt.

$$Wfmax = \max(|Wf(1)|,|Wf(2)|,|Wf(3)|,\ldots) = 0,951$$

Winkelfehler-Vergleich

| | | |
|---|---|---|
| \|Wf(1)\| = Wfmax: | 0,951 = 0,951: | Bedingung erfüllt. |
| \|Wf(2)\| = Wfmax: | 0,000 ≠ 0,951: | Bedingung nicht erfüllt. |
| \|Wf(3)\| = Wfmax: | 0,951 = 0,951: | Bedingung erfüllt. |
| \|Wf(4)\| = Wfmax: | 0,588 ≠ 0,951: | Bedingung nicht erfüllt. |
| \|Wf(5)\| = Wfmax: | 0,588 ≠ 0,951: | Bedingung nicht erfüllt. |
| \|Wf(6)\| = Wfmax: | 0,951 = 0,951: | Bedingung erfüllt. |
| \|Wf(7)\| = Wfmax: | 0,000 ≠ 0,951: | Bedingung nicht erfüllt. |
| \|Wf(8)\| = Wfmax: | 0,951 = 0,951: | Bedingung erfüllt. |
| \|Wf(9)\| = Wfmax: | 0,588 ≠ 0,951: | Bedingung nicht erfüllt. |
| \|Wf(10)\| = Wfmax: | 0,588 ≠ 0,951: | Bedingung nicht erfüllt. |

Da hier mehrere Polzähne den gleichen geringsten absoluten Winkelfehler aufweisen, wird von diesen Polzähnen derjenige Polzahn Z ausgewählt, der im Bereich zwischen Anfangslamelle La und Endlamelle Le der Spule S liegt. Außerdem wird geprüft, ob für den ausgewählten Zahn Z bereits die vorbestimmte Anzahl M von Spulen S ausgewählt wurde.

Ergebnis des Vergleichs:

Die Spule 2 kann auf Zahn 3 gewickelt werden. Der ermittelte Wert ist negativ, so dass die Spule 2 links herum gewickelt wird. Nunmehr ist auch die zweite Zeile der Wickeltabelle in Figur 3 festgelegt.

Die gleichen Berechnungen werden nunmehr für die übrigen Spulen 3 bis 20 in gleicher Weise mit den Gleichungen (2) und (3) durchgeführt und damit wird zeilenweise die Wickeltabelle in Figur 3 erstellt. Um den Läufer 13 des Gleichstrommotors 10 nun mit dem erfindungsgemäßen Verfahren bewickeln zu können, wird zunächst die Wickeltabelle aus Figur 3 in einen Wickelautomaten eingegeben.

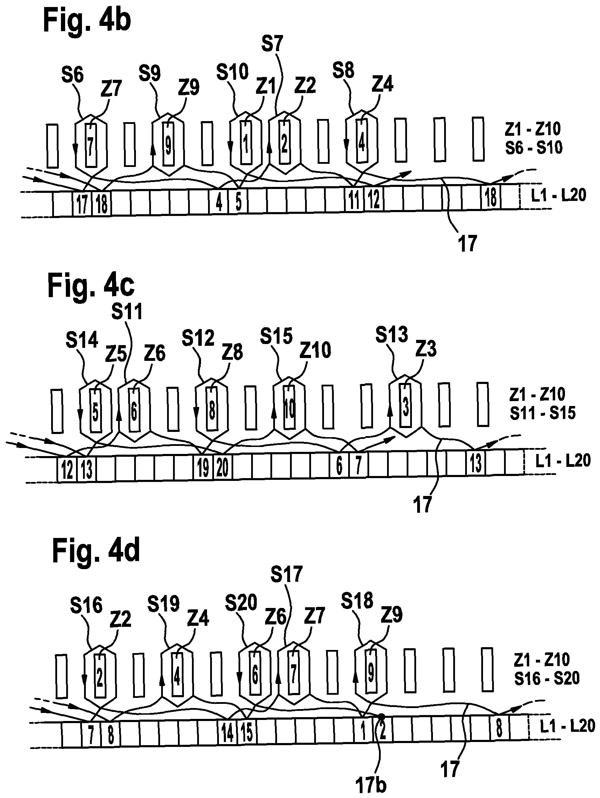

Der nicht dargestellte Wickelautomat arbeitet die Wickeltabelle aus Figur 3 zeilenweise ab, wobei die Spulen S1 bis S20 nacheinander durchgewickelt und jeweils mit den ihnen zugeordneten Lamellen L des Kommutators 16 kontaktiert werden. In Figur 4 wird die Herstellung der Spulen nach der Wickeltabelle aus Figur 3 in vier Abschnitten a) bis d) dargestellt und im Folgenden beschrieben.

Der Wickeldraht 17 wird gemäß Abschnitt a) zunächst mit seinem Anfang 17a an Lamelle L2 kontaktiert. Er wird von dort zum Polzahn Z1 geführt und die Spule S1 wird -mittels Pfeil angedeutet- rechts herum auf den Polzahn Z1 gewickelt. Das Spulenende wird mit der Lamelle L9 kontaktiert. Von dort wird nun die Spule S2 auf den Polzahn Z3 links herum gewickelt und das Spulenende auf Lamelle L16 gelegt. Von dort wird die Spule S3 rechts herum auf den Polzahn Z8 gewickelt und das Spulenende auf Lamelle L3 gelegt. Von dort wird die Spule S4 links herum auf den Polzahn Z10 gewickelt und das Spulenende mit der Lamelle L10 kontaktiert. Von dort wird die Spule S5 rechts herum auf den Polzahn Z5 gewickelt und das Spulenende mit der Lamelle L17 kontaktiert. Von Lamelle L17 wird der Spulendraht durch den angedeuteten Pfeil auf den Abschnitt b) der Figur 3 übergeleitet.

Dort wird von der Lamelle L17 die Spule S6 auf den Polzahn Z7 links herum aufgewickelt und das Spulenende mit der Lamelle L4 kontaktiert. Von dort wird die Spule S7 auf den Polzahn Z2 rechts herum aufgewickelt und das Spulenende mit der Lamelle L11 kontaktiert. Von Lamelle L11 wird nun die Spule S8 auf den Polzahn Z4 links herum aufgewickelt und das Spulenende mit der Lamelle L18 kontaktiert. Von dort wird die Spule S9 auf den Polzahn Z9 rechts herum aufgewickelt und das Spulenende mit der Lamelle L5 kontaktiert. Von Lamelle L5 wird die Spule S10 links herum auf den Polzahn Z1 aufgewickelt und das Spulenende auf die Lamelle L12 gelegt. Von Lamelle L12 wird der Wickeldraht nunmehr gemäß dem angedeuteten Pfeil auf den Abschnitt c) von Figur 4 übergeleitet.

Die Spule S11 wird dort von Lamelle L12 ausgehend um den Polzahn Z6 rechts herum gewickelt und das Spulenende auf Lamelle 19 gelegt. Von dort wird die Spule S12 auf den Polzahn Z8 links herum aufgewickelt und das Spulenende auf Lamelle L6 gelegt. Von dort wird die Spule S13 auf den Polzahn Z3 rechts herum aufgewickelt und das Spulenende mit Lamelle L13 kontaktiert. Von L13 aus wird nun die Spule S14 auf den Polzahn Z5 links herum aufgewickelt und das Spulenende mit der Lamelle L20 kontaktiert. Von dort aus wird die Spule S15 auf den Polzahn Z10 rechts herum aufgewickelt und das Ende mit der Lamelle L7 kontaktiert. Von dort wird der Wicklungsdraht gemäß dem angedeuteten Pfeil auf den Abschnitt d) der Figur 4 übergeleitet.

Von Lamelle L7 wird nunmehr die Spule S16 auf den Polzahn Z2 links herum aufgewickelt und das Spulenende mit der Lamelle L14 kontaktiert. Von dort wird die Spule S17 auf den Polzahn Z7 rechts herum aufgewickelt und das Spulenende mit der Lamelle L1 kontaktiert. Die Spule S18 wird von dort aus auf den Polzahn Z9 links herum aufgewickelt und das Spulenende mit der Lamelle L8 kontaktiert. Von Lamelle L8 wird die Spule S19 auf den Polzahn Z4 rechts herum aufgewickelt und ihr Spulenende auf die Lamelle L15 gelegt. Schließlich wird noch die Spule S20 auf den Polzahn Z6 links herum aufgewickelt und das Spulenende wiederum auf die Lamelle L2 gelegt. Das Ende 17b des Wickeldrahtes 17 wird hier gekappt. Somit sind sämtliche 20 Spulen nacheinander durchgewickelt auf allen Polzähnen Z gleichmäßig verteilt angeordnet. Aus der Wickeltabelle nach Figur 3 ergibt sich ebenso wie aus Figur 1, dass auf jeden der zehn Polzähne Z jeweils zwei Spulen S gewickelt werden.

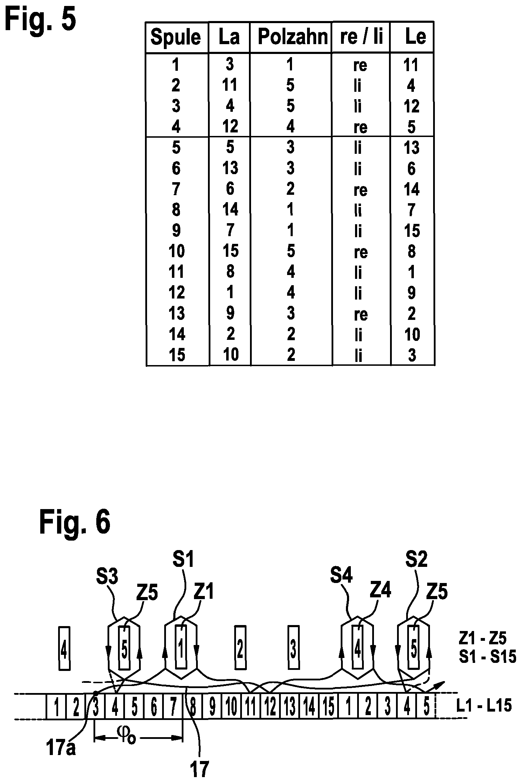

In einem zweiten Ausführungsbeispiel soll nunmehr nach dem zuvor beschriebenen Verfahren eine in Figur 5 dargestellte Wickeltabelle für einen vierpoligen Gleichstrommotor erstellt werden, dessen Zähnezahl z, Spulenzahl s und Lamellenzahl l modifiziert werden.

Für das zweite Ausführungsbeispiel gilt:

| | |
|---|---|
| Polpaarzahl | $p = 2$ |
| Polzähnezahl | $z = 5$ |
| Lamellenzahl | $l = 15$ |
| Spulenzahl | $s = 15$ |

(fortgesetzt)

| Multiplikator | M = 3 |
| Lamellenschrittweite | Y = 8 |
| Windungszahl | Wz = 11 |

Mit diesen Werten sind die zuvor aufgezählten Bedingungen erfüllt. Mit den beiden Gleichungen (1) werden nun für jede Spule Li die Anfangslamelle Lai und Endlamelle Lei festgelegt.

Spulenkontaktierung am Kommutator:

$$Lai = (La1+[(i-1)*Y]) \bmod 15; \qquad Lei = (Lai+Y) \bmod 15$$

| | | |
|---|---|---|
| Spule 1 : | La 1=(3+(1-1)*8)mod15= 3; | Le 1=(3+8)mod20=11 |
| Spule 2 : | La 2=(3+(2-1)*8)mod15=11; | Le 2=(11+8)mod20= 4 |
| Spule 3 : | La 3=(3+(3-1)*8)mod15= 4; | Le 3=(4+8)mod20=12 |
| Spule 4 : | La 4=(3+(4-1)*8)mod15=12; | Le 4=(12+8)mod20= 5 |
| Spule 5 : | La 5=(3+(5-1)*8)mod15= 5; | Le 5=(5+8)mod20=13 |
| Spule 6 : | La 6=(3+(6-1)*8)mod15=13; | Le 6=(13+8)mod20= 6 |
| Spule 7 : | La 7=(3+(7-1)*8)mod15= 6; | Le 7=(6+8)mod20=14 |
| Spule 8 : | La 8=(3+(8-1)*8)mod15=14; | Le 8=(14+8)mod20= 7 |
| Spule 9 : | La 9=(3+(9-1)*8)mod15= 7; | Le 9=(7+8)mod20=15 |
| Spule 10: | La10=(3+(10-1)*8)mod15=15; | Le10=(15+8)mod20= 8 |
| Spule 11: | La11=(3+(11-1)*8)mod15= 8; | Le11=(8+8)mod20= 1 |
| Spule 12: | La12=(3+(12-1)*8)mod15= 1; | Le12=(15+8)mod20= 9 |
| Spule 13: | La13=(3+(13-1)*8)mod15= 9; | Le13=(9+8)mod20= 2 |
| Spule 14: | La14=(3+(14-1)*8)mod15= 2; | Le14=(15+8)mod20=10 |
| Spule 15: | La15=(3+(15-1)*8)mod15=10; | Le15=(10+7)mod20= 3 |

Winkelfehlerermittlung:

Für jede Spule S muss nun für alle Polzähne Z der jeweilige Winkelfehler Wf nach der Gleichung (2) ermittelt werden.

Winkelfehler der Spule 1

$$Wf(j) = \cos[2\pi \times p/z \times (j-Lai/M)$$

Zahn 1: Wf(1) = cos[2pi x 2/5 x ( 1 - 3/3 )] =  1,000

Zahn 2: Wf(2) = cos[2pi x 2/5 x ( 2 - 3/3 )] = -0,809

Zahn 3: Wf(3) = cos[2pi x 2/5 x ( 3 - 3/3 )] =  0,309

Zahn 4: Wf(4) = cos[2pi x 2/5 x ( 4 - 3/3 )] =  0,309

Zahn 5: Wf(5) = cos[2pi x 2/5 x ( 5 - 3/3 )] = -0,809

Im nächsten Durchgang wird nun mit der Gleichung (3) für die Spule 1 derjenige Polzahn mit dem geringsten Winkelfehler Wf bzw. mit dem größten Winkelfehler-Cosinuswert Wfmax ermittelt.

```
Wfmax = max(|Wf(1)|,|Wf(2)|,|Wf(3)|,…) = 1,000
```

Winkelfehlervergleich:
|Wf(1)|= Wfmax :    1 = 1: Bedingung erfüllt.
|Wf(2)|= Wfmax :    0,809 ≠ 1: Bedingung nicht erfüllt.
|Wf(3)|= Wfmax :    0,309 ≠ 1: Bedingung nicht erfüllt.
|Wf(4)|= Wfmax :    0,309 ≠ 1: Bedingung nicht erfüllt.
|Wf(5)|= Wfmax :    0,809 ≠ 1: Bedingung nicht erfüllt.

Ergebnis des Vergleichs:

Die Spule S1 kann auf Zahn Z1 gewickelt werden.
Der ermittelte Wert ist positiv, so dass die Spule 1 rechts herum gewickelt wird. Damit ist die erste Zeile der Wickeltabelle in Figur 5 festgelegt.
Winkelfehler der Spule 2

```
Wf(j) = cos[ 2pi x p/z x ( j-kai/M ) ]
```

```
Zahn 1 :  Wf(1) = cos[2pi x 2/5 x ( 1 - 11/3 )] =  0,914
```

```
Zahn 2 :  Wf(2) = cos[2pi x 2/5 x ( 2 - 11/3 )] = -0,500
```

```
Zahn 3 :  Wf(3) = cos[2pi x 2/5 x ( 3 - 11/3 )] = -0,105
```

```
Zahn 4 :  Wf(4) = cos[2pi x 2/5 x ( 4 - 11/3 )] =  0,669
```

```
Zahn 5 :  Wf(5) = cos[2pi x 2/5 x ( 5 - 11/3 )] = -0,978
```

Im nächsten Durchgang wird nun mit der Gleichung (3) für die Spule 2 derjenige Polzahn mit dem geringsten Winkelfehler Wf bzw. mit dem größten Winkelfehler-Cosinuswert Wfmax ermittelt.

```
Wfmax = max(|Wf(1)|,|Wf(2)|,|Wf(3)|,…) = 0,978
```

Winkelfehlervergleich:
|Wf(1)|= Wfmax :    0,914 ≠ 0,978:   Bedingung nicht erfüllt.
|Wf(2)|= Wfmax :    0,500 ≠ 0,978:   Bedingung nicht erfüllt.
|Wf(3)|= Wfmax :    0,105 ≠ 0,978:   Bedingung nicht erfüllt.
|Wf(4)|= Wfmax :    0,669 ≠ 0,978:   Bedingung nicht erfüllt.
|Wf(5)|= Wfmax :    0,978 = 0,978:   Bedingung erfüllt.

Ergebnis des Vergleichs:

Die Spule S2 kann auf Zahn Z5 gewickelt werden.

Der ermittelte Wert ist negativ, so dass die Spule 2 links herum gewickelt wird. Damit ist die zweite Zeile der Wickeltabelle in Figur 5 festgelegt.

Die gleichen Berechnungen werden nunmehr für die übrigen Spulen 3 bis 15 in gleicher Weise mit den Gleichungen (2) und (3) durchgeführt und damit wird zeilenweise die Wickeltabelle in Figur 5 erstellt.

In Figur 6 wird die Herstellung der Spulen in einem ersten Abschnitt für die Spulen 1 bis 4 dargestellt und beschrieben.

Der Wickeldraht 17 wird dabei zunächst mit seinem Anfang 17a an Lamelle L3 kontaktiert. Er wird von dort zum Polzahn Z1 geführt und die Spule S1 wird rechts herum auf den Polzahn Z1 gewickelt. Das Spulenende wird mit der Lamelle L11 kontaktiert. Von dort wird nun die Spule S2 auf den Polzahn Z5 links herum gewickelt und das Spulenende auf Lamelle L4 gelegt. Von dort wird die Spule S3 ebenfalls links herum auf den Polzahn Z5 gewickelt und das Spulenende auf Lamelle L12 gelegt. Von dort wird die Spule S4 rechts herum auf den Polzahn Z4 gewickelt und das Spulenende mit der Lamelle L5 kontaktiert. Von Lamelle L5 wird der Wickeldraht 17 durch den angedeuteten Pfeil zum Spulenanfang der Spule 6 übergeleitet und die Wickeltabelle wird in gleicher Weise wie in Figur 4 des ersten Ausführungsbeispieles vom Wickelautomaten abgearbeitet, bis sämtliche Spulen auf dem Läufer der Maschine durchgewickelt sind.

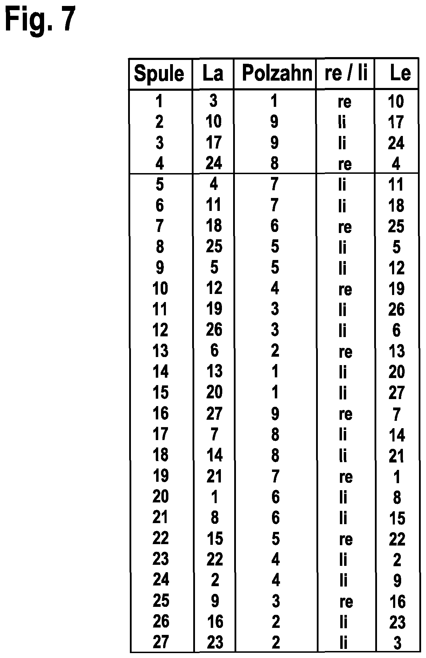

In einem dritten Ausführungsbeispiel sollen nunmehr nach dem zuvor beschriebenen Verfahren eine in Figur 7 dargestellte Wickeltabelle für einen achtpoligen Gleichstrommotor erstellt werden, dessen Zähnezahl z, Spulenzahl s und Lamellenzahl l modifiziert werden.

Für das dritte Ausführungsbeispiel gilt:

| | |
|---|---|
| Polpaarzahl | p = 4 |
| Polzähnezahl | z = 9 |
| Lamellenzahl | l = 27 |
| Spulenzahl | s = 27 |
| Multiplikator | M = 3 |
| Lamellenschrittweite | Y = 7 |
| Windungszahl | Wz = 15 |

Mit diesen Werten sind die zuvor aufgezählten Bedingungen erfüllt. Mit den beiden Gleichungen (1) werden nun für jede Spule Li die Anfangslamelle Lai und Endlamelle Lei festgelegt.

Spulenkontaktierung am Kommutator:

$$Lai = (La1+[(i-1)*Y]) \bmod 27; \quad Lei = (Lai+Y) \bmod 27$$

| | | |
|---|---|---|
| Spule 1: | La1=(3+(1-1)*7) mod 27=3; | Le1=(3+7) mod 27=10 |
| Spule 2: | La2=(3+(2-1)*7) mod 27=10; | Le2=(10+7) mod 27=17 |
| Spule 3: | La3=(3+(3-1)*7) mod 27=17; | Le3=(17+7) mod 27=24 |
| Spule 4: | La4=(3+(4-1)*7) mod 27=24; | Le4=(24+7) mod 27=4 |
| Spule 5: | La5=(3+(5-1)*7) mod 27=4; | Le5=(4+7) mod 27=11 |
| Spule 6: | La6=(3+(6-1)*7) mod 27=11; | Le6=(11+7) mod 27=18 |
| Spule 7: | La7=(3+(7-1)*7) mod 27=18; | Le7=(18+7) mod 27=25 |
| Spule 8: | La8=(3+(8-1)*7) mod 27=25; | Le8=(25+7) mod 27=5 |
| Spule 9: | La9=(3+(9-1)*7) mod 27=5; | Le9=(5+7) mod 27=12 |
| Spule10: | La10=(3+(10-1)*7) mod 27=12; | Le10=(12+7) mod 27=19 |
| Spule11: | La11=(3+(11-1)*7) mod 27=19; | Le11=(19+7) mod 27=26 |
| Spule12: | La12=(3+(12-1)*7) mod 27=26; | Le12=(26+7) mod 27=6 |
| Spule13: | La13=(3+(13-1)*7) mod 27=6; | Le13=(6+7) mod 27=13 |
| Spule14: | La14=(3+(14-1)*7) mod 27=13; | Le14=(13+7) mod 27=20 |
| Spule15: | La15=(3+(15-1)*7) mod 27=20; | Le15=(20+7) mod 27=27 |
| Spule16: | La16=(3+(16-1)*7) mod 27=27; | Le16=(27+7) mod 27=7 |
| Spule17: | La17=(3+(17-1)*7) mod 27=7; | Le17=(7+7) mod 27=14 |
| Spule18: | La18=(3+(18-1)*7) mod 27=14; | Le18=(14+7) mod 27=21 |
| Spule19: | La19=(3+(19-1)*7) mod 27=21; | Le19=(21+7) mod 27=1 |

(fortgesetzt)

| Spule20: | La20=(3+(20-1)*7) mod 27=1; | Le20=(1+7) mod 27=8 |
|---|---|---|
| Spule21: | La21=(3+(21-1)*7) mod 27=8; | Le21=(8+7) mod 27=15 |
| Spule22: | La22=(3+(22-1)*7) mod 27=15; | Le22=(15+7) mod 27=22 |
| Spule23: | La23=(3+(23-1)*7) mod 27=22; | Le23=(22+7) mod 27=2 |
| Spule24: | La24=(3+(24-1)*7) mod 27=2; | Le24=(2+7) mod 27=9 |
| Spule25: | La25=(3+(25-1)*7) mod 27=9; | Le25=(9+7) mod 27=16 |
| Spule26: | La26=(3+(26-1)*7) mod 27=16; | Le26=(16+7) mod 27=23 |
| Spule27: | La27=(3+(27-1)*7) mod 27=23; | Le27=(23+7) mod 27=3 |

Winkelfehlerermittlung:

Für jede Spule S muss nun für alle Polzähne Z der jeweilige Winkelfehler Wf nach der Gleichung (2) ermittelt werden.

Winkelfehler der Spule 1

```
Wf(j) = cos[ 2pi x p/z x ( j-kai/M ) ]
```

```
Zahn 1 :  Wf(1) = cos[2pi x 4/9 x ( 1 - 3/3 )] =  1,000
```

```
Zahn 2 :  Wf(2) = cos[2pi x 4/9 x ( 2 - 3/3 )] = -0,940
```

```
Zahn 3 :  Wf(3) = cos[2pi x 4/9 x ( 3 - 3/3 )] =  0,766
```

```
Zahn 4 :  Wf(4) = cos[2pi x 4/9 x ( 4 - 3/3 )] = -0,500
```

```
Zahn 5 :  Wf(5) = cos[2pi x 4/9 x ( 5 - 3/3 )] =  0,174
```

```
Zahn 6 :  Wf(6) = cos[2pi x 4/9 x ( 6 - 3/3 )] =  0,174
```

```
Zahn 7 :  Wf(7) = cos[2pi x 4/9 x ( 7 - 3/3 )] = -0,500
```

```
Zahn 8 :  Wf(8) = cos[2pi x 4/9 x ( 8 - 3/3 )] =  0,766
```

```
Zahn 9 :  Wf(9) = cos[2pi x 4/9 x ( 9 - 3/3 )] = -0,940
```

Im nächsten Durchgang wird nun mit der Gleichung (3) für die Spule 1 derjenige Polzahn mit dem geringsten Winkelfehler Wf bzw. mit dem größten Winkelfehler-Cosinuswert Wfmax ermittelt.

```
Wfmax = max(|Wf(1)|,|Wf(2)|,|Wf(3)|,…) = 1,000
```

Winkelfehlervergleich:
|Wf(1)|= Wfmax:     1 = 1:        Bedingung erfüllt.

(fortgesetzt)

| | | |
|---|---|---|
| |Wf(2)|= Wfmax: | 0,94 ≠ 1: | Bedingung nicht erfüllt. |
| |Wf(3)|= Wfmax: | 0,766 ≠ 1: | Bedingung nicht erfüllt. |
| |Wf(4)|= Wfmax: | 0,5 ≠ 1: | Bedingung nicht erfüllt. |
| |Wf(5)|= Wfmax: | 0,174 ≠ 1: | Bedingung nicht erfüllt. |
| |Wf(6)|= Wfmax: | 0,174 ≠ 1: | Bedingung nicht erfüllt. |
| |Wf(7)|= Wfmax: | 0,5 ≠ 1: | Bedingung nicht erfüllt. |
| |Wf(8)|= Wfmax: | 0,766 ≠ 1: | Bedingung nicht erfüllt. |
| |Wf(9)|= Wfmax: | 0,94 ≠ 1: | Bedingung nicht erfüllt. |

Ergebnis des Vergleichs:

Die Spule S1 kann auf Zahn Z1 gewickelt werden.

Der ermittelte Wert ist positiv, so dass die Spule 1 rechts herum gewickelt wird. Damit ist die erste Zeile der Wickeltabelle in Figur 7 festgelegt.

Winkelfehler der Spule 2

$$Wf(j) = cos[\ 2pi \ x \ p/z \ x \ (\ j-kai/M\ )\ ]$$

$$Zahn\ 1:\ Wf(1) = cos[2pi \ x \ 4/9 \ x \ (\ 1 - 10/3\ )] = 0,973$$

$$Zahn\ 2:\ Wf(2) = cos[2pi \ x \ 4/9 \ x \ (\ 2 - 10/3\ )] = -0,835$$

$$Zahn\ 3:\ Wf(3) = cos[2pi \ x \ 4/9 \ x \ (\ 3 - 10/3\ )] = 0,597$$

$$Zahn\ 4:\ Wf(4) = cos[2pi \ x \ 4/9 \ x \ (\ 4 - 10/3\ )] = -0,287$$

$$Zahn\ 5:\ Wf(5) = cos[2pi \ x \ 4/9 \ x \ (\ 5 - 10/3\ )] = -0,058$$

$$Zahn\ 6:\ Wf(6) = cos[2pi \ x \ 4/9 \ x \ (\ 6 - 10/3\ )] = 0,396$$

$$Zahn\ 7:\ Wf(7) = cos[2pi \ x \ 4/9 \ x \ (\ 7 - 10/3\ )] = -0,686$$

$$Zahn\ 8:\ Wf(8) = cos[2pi \ x \ 4/9 \ x \ (\ 8 - 10/3\ )] = 0,894$$

$$Zahn\ 9:\ Wf(9) = cos[2pi \ x \ 4/9 \ x \ (\ 9 - 10/3\ )] = -0,993$$

Im nächsten Durchgang wird nun mit der Gleichung (3) für die Spule 2 derjenige Polzahn mit dem geringsten Winkelfehler Wf bzw. mit dem größten Winkelfehler-Cosinuswert Wfmax ermittelt.

$$Wfmax = max(|Wf(1)|,|Wf(2)|,|Wf(3)|,…) = 0,993$$

Winkelfehlervergleich:

| | | | |
|---|---|---|---|
| \|Wf(1)\|= Wfmax: | 0,973 | $\neq$ 0,993: | Bedingung nicht erfüllt. |
| \|Wf(2)\|= Wfmax: | 0,835 | $\neq$ 0,993: | Bedingung nicht erfüllt. |
| \|Wf(3)\|= Wfmax: | 0,597 | $\neq$ 0,993: | Bedingung nicht erfüllt. |
| \|Wf(4)\|= Wfmax: | 0,287 | $\neq$ 0,993: | Bedingung nicht erfüllt. |
| \|Wf(5)\|= Wfmax: | 0,058 | $\neq$ 0,993: | Bedingung nicht erfüllt. |
| \|Wf(6)\|= Wfmax: | 0,396 | $\neq$ 0,993: | Bedingung nicht erfüllt. |
| \|Wf(7)\|= Wfmax: | 0,686 | $\neq$ 0,993: | Bedingung nicht erfüllt. |
| \|Wf(8)\|= Wfmax: | 0,894 | $\neq$ 0,993: | Bedingung nicht erfüllt. |
| \|Wf(9)\|= Wfmax: | 0,993 | = 0,993: | Bedingung erfüllt. |

Ergebnis des Vergleichs:

Die Spule S2 kann auf Zahn Z9 gewickelt werden.
Der ermittelte Wert ist negativ, so dass die Spule 2 links herum gewickelt wird. Damit ist die zweite Zeile der Wickeltabelle in Figur 7 festgelegt.

Die gleichen Berechnungen werden nunmehr für die übrigen Spulen 3 bis 27 in gleicher Weise mit den Gleichungen (2) und (3) durchgeführt und damit wird zeilenweise die Wickeltabelle in Figur 7 erstellt.

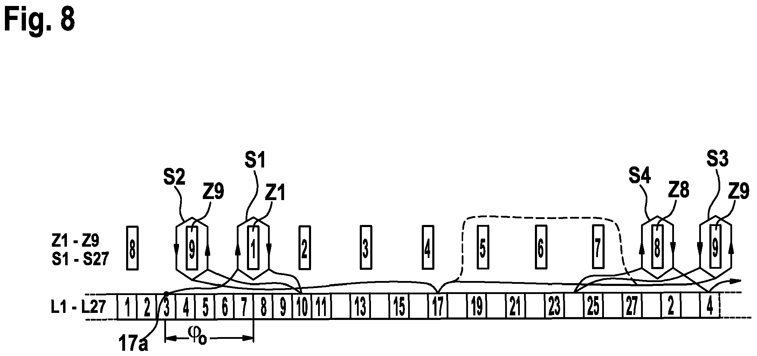

In Figur 8 wird die Herstellung der Spulen in einem ersten Abschnitt für die Spulen 1 bis 4 dargestellt und beschrieben.

Der Wickeldraht 17 wird dabei zunächst mit seinem Anfang 17a an Lamelle L3 kontaktiert. Er wird von dort zum Polzahn Z1 geführt und die Spule S1 wird rechts herum auf den Polzahn Z1 gewickelt. Das Spulenende wird mit der Lamelle L10 kontaktiert. Von dort wird nun die Spule S2 auf den Polzahn Z9 links herum gewickelt und das Spulenende auf Lamelle L17 gelegt. Von dort wird die Spule S3 ebenfalls links herum auf den Polzahn Z9 gewickelt und das Spulenende auf Lamelle L24 gelegt. Von dort wird die Spule S4 rechts herum auf den Polzahn Z8 gewickelt und das Spulenende mit der Lamelle L4 kontaktiert. Von Lamelle L4 wird der Spulendraht durch den angedeuteten Pfeil zum Spulenanfang der Spule 5 übergeleitet und die Wickeltabelle wird in gleicher Weise wie in Figur 4 des ersten Ausführungsbeispieles vom Wickelautomaten abgearbeitet, bis sämtliche Spulen auf dem Läufer der Maschine durchgewickelt sind.

Um auf der Kommutatorseite des Läufers 13 lange Verbindungen zwischen den Lamellen und den Spulen zu vermeiden, kann es sinnvoll sein, den Wickeldraht 17 zwischen der Anfangs- oder Endlamelle La, Le und einer Spule S zwischen zwei näher gelegene Polzähne Z hindurch zur Ankerrückseite und von dort insbesondere zwischen zwei weitere Polzähne Z hindurch zur Vorderseite zurück und dann zur Spule S beziehungsweise zur Lamelle L zu führen, wie dies in Figur 8 bei der Spule S3 gestrichelt angedeutet ist.

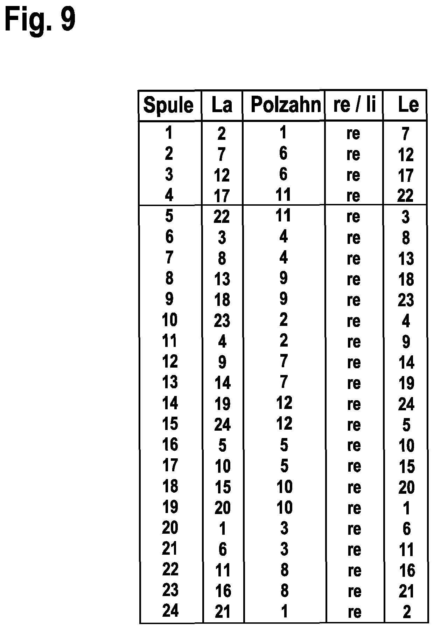

In einem vierten Ausführungsbeispiel sollen nunmehr nach dem zuvor beschriebenen Verfahren eine in Figur 9 dargestellte Wickeltabelle für einen zehnpoligen Gleichstrommotor erstellt werden, dessen Zähnezahl z, Spulenzahl s und Lamellenzahl l modifiziert werden.

Für das vierte Ausführungsbeispiel gilt:

| | | |
|---|---|---|
| Polpaarzahl | p = 5 |
| Polzähnezahl | z = 12 |
| Lamellenzahl | l = 24 |
| Spulenzahl | s = 24 |
| Multiplikator | M = 2 |
| Lamellenschrittweite | Y = 5 |
| Windungszahl | Wz = 18 |

Mit diesen Werten sind die zuvor aufgezählten Bedingungen erfüllt. Mit den beiden Gleichungen (1) werden nun für jede Spule Li die Anfangslamelle Lai und Endlamelle Lei festgelegt.

Spulenkontaktierung am Kommutator:

$$Lai = (La1+[(i-1)*Y]) \bmod 24; \quad Lei = (Lai+Y) \bmod 24$$

| | | |
|---|---|---|
| Spule 1 : | La1=(2+(1-1)*5)mod 24=2; | Le1=(2+5) mod 24=7 |
| Spule 2 : | La2=(2+(2-1)*5)mod 24=7; | Le2=(7+5) mod 24=12 |
| Spule 3 : | La3=(2+(3-1)*5)mod 24=12; | Le3=(12+5) mod 24=17 |
| Spule 4 : | La4=(2+(4-1)*5)mod 24=17; | Le4=(17+5) mod 24=22 |
| Spule 5 : | La5=(2+(5-1)*5)mod 24=22; | Le5=(22+5) mod 24=3 |
| Spule 6 : | La6=(2+(6-1)*5)mod 24=3; | Le6=(3+5) mod 24=8 |
| Spule 7 : | La7=(2+(7-1)*5)mod 24=8; | Le7=(8+5) mod 24=13 |
| Spule 8 : | La8=(2+(8-1)*5)mod 24=13; | Le8=(13+5) mod 24=18 |
| Spule 9 : | La9=(2+(9-1)*5)mod 24=18; | Le9=(18+5) mod 24=23 |
| Spule10 : | La10=(2+(10-1)*5)mod 24=23; | Le10=(23+5) mod 24=4 |
| Spule11 : | La11=(2+(11-1)*5)mod 24=4; | Le11=(4+5) mod 24=9 |
| Spule12 : | La12=(2+(12-1)*5)mod 24=9; | Le12=(9+5) mod 24=14 |
| Spule13 : | La13=(2+(13-1)*5)mod 24=14; | Le13=(14+5) mod 24=19 |
| Spule14 : | La14=(2+(14-1)*5)mod 24=19; | Le14=(19+5) mod 24=24 |
| Spule15 : | La15=(2+(15-1)*5)mod 24=24; | Le15=(24+5) mod 24=5 |
| Spule16 : | La16=(2+(16-1)*5)mod 24=5; | Le16=(5+5) mod 24=10 |
| Spule17 : | La17=(2+(17-1)*5)mod 24=10; | Le17=(10+5) mod 24=15 |
| Spule18 : | La18=(2+(18-1)*5)mod 24=15; | Le18=(15+5) mod 24=20 |
| Spule19 : | La19=(2+(19-1)*5)mod 24=20; | Le19=(20+5) mod 24=1 |
| Spule20 : | La20=(2+(20-1)*5)mod 24=1; | Le20=(1+5) mod 24=6 |
| Spule21 : | La21=(2+(21-1)*5)mod 24=6; | Le21=(6+5) mod 24=11 |
| Spule22 : | La22=(2+(22-1)*5)mod 24=11; | Le22=(11+5) mod 24=16 |
| Spule23 : | La23=(2+(23-1)*5)mod 24=16; | Le23=(16+5) mod 24=21 |
| Spule24 : | La24=(2+(24-1)*5)mod 24=21; | Le24=(21+5) mod 24=2 |

Winkelfehlerermittlung:

Für jede Spule S muss nun für alle Polzähne Z der jeweilige Winkelfehler Wf nach der Gleichung (2) ermittelt werden.

Winkelfehler der Spule 1

```
Wf(j) = cos[ 2pi x p/z x ( j-kai/M ) ]

Zahn 1 :  Wf(1) = cos[2pi x 5/12 x ( 1 - 2/2 )] =  1,000

Zahn 2 :  Wf(2) = cos[2pi x 5/12 x ( 2 - 2/2 )] = -0,866

Zahn 3 :  Wf(3) = cos[2pi x 5/12 x ( 3 - 2/2 )] =  0,500

Zahn 4 :  Wf(4) = cos[2pi x 5/12 x ( 4 - 2/2 )] =  0,000

Zahn 5 :  Wf(5) = cos[2pi x 5/12 x ( 5 - 2/2 )] = -0,500

Zahn 6 :  Wf(6) = cos[2pi x 5/12 x ( 6 - 2/2 )] =  0,866
```

```
Zahn 7 :  Wf(7) = cos[2pi x 5/12 x ( 7 - 2/2 )] = -1,000
```

```
Zahn 8 :  Wf(8) = cos[2pi x 5/12 x ( 8 - 2/2 )] =  0,866
```

```
Zahn 9 :  Wf(9) = cos[2pi x 5/12 x ( 9 - 2/2 )] = -0,500
```

```
Zahn 10 : Wf(10)= cos[2pi x 5/12 x (10 - 2/2 )] =  0,000
```

```
Zahn 11 : Wf(11)= cos[2pi x 5/12 x (11 - 2/2 )] =  0,500
```

```
Zahn 12 : Wf(12)= cos[2pi x 5/12 x (12 - 2/2 )] = -0,866
```

Im nächsten Durchgang wird nun mit der Gleichung (3) für die Spule 1 derjenige Polzahn mit dem geringsten Winkelfehler Wf bzw. mit dem größten Winkelfehler-Cosinuswert Wfmax ermittelt.

```
Wfmax = max(|Wf(1)|,|Wf(2)|,|Wf(3)|,…) = 1,000
```

Winkelfehlervergleich:

| | | |
|---|---|---|
| $\|Wf(1)\|$ = Wfmax: | 1 = 1: | Bedingung erfüllt. |
| $\|Wf(2)\|$ = Wfmax: | 0,866 ≠ 1: | Bedingung nicht erfüllt. |
| $\|Wf(3)\|$ = Wfmax: | 0,5 ≠ 1: | Bedingung nicht erfüllt. |
| $\|Wf(4)\|$ = Wfmax: | 0,000 ≠ 1: | Bedingung nicht erfüllt. |
| $\|Wf(5)\|$ = Wfmax: | 0,5 ≠ 1: | Bedingung nicht erfüllt. |
| $|Wf(6)|$ = Wfmax: | 0,866 ≠ 1: | Bedingung nicht erfüllt. |
| $\|Wf(7)\|$ = Wfmax: | 1 = 1: | Bedingung erfüllt. |
| $\|Wf(8)\|$ = Wfmax: | 0,866 ≠ 1: | Bedingung nicht erfüllt. |
| $\|Wf(9)\|$ = Wfmax: | 0,5 ≠ 1: | Bedingung nicht erfüllt. |
| $\|Wf(10)\|$= Wfmax: | 0,000 ≠ 1: | Bedingung nicht erfüllt. |
| $\|Wf(11)\|$= Wfmax: | 0,5 ≠ 1: | Bedingung nicht erfüllt. |
| $\|Wf(12)\|$= Wfmax: | 0,866 ≠ 1: | Bedingung nicht erfüllt.: |

Ergebnis des Vergleichs:

Die Spule S1 kann auf Zahn Z1 gewickelt werden.
Der ermittelte Wert ist positiv, so dass die Spule 1 rechts herum gewickelt wird. Damit ist die erste Zeile der Wickeltabelle in Figur 9 festgelegt.
Winkelfehler der Spule 2

```
Wf(j) = cos[ 2pi x p/z x ( j-kai/M ) ]
```

```
Zahn 1 :  Wf(1) = cos[2pi x 5/12 x ( 1 - 7/2 )] = 0,966
```

```
Zahn 2 :  Wf(2) = cos[2pi x 5/12 x ( 2 - 7/2 )] = -0,707
```

```
Zahn 3 :  Wf(3) = cos[2pi x 5/12 x ( 3 - 7/2 )] = 0,259


Zahn 4 :  Wf(4) = cos[2pi x 5/12 x ( 4 - 7/2 )] = 0,259


Zahn 5 :  Wf(5) = cos[2pi x 5/12 x ( 5 - 7/2 )] = -0,707


Zahn 6 :  Wf(6) = cos[2pi x 5/12 x ( 6 - 7/2 )] =  0,966


Zahn 7 :  Wf(7) = cos[2pi x 5/12 x ( 7 - 7/2 )] = -0,966


Zahn 8 :  Wf(8) = cos[2pi x 5/12 x ( 8 - 7/2 )] =  0,707


Zahn 9 :  Wf(9) = cos[2pi x 5/12 x ( 9 - 7/2 )] = -0,259


Zahn 10:  Wf(10)= cos[2pi x 5/12 x (10 - 7/2 )] = -0,259


Zahn 11:  Wf(11)= cos[2pi x 5/12 x (11 - 7/2 )] =  0,707


Zahn 12:  Wf(12)= cos[2pi x 5/12 x (12 - 7/2 )] = -0,966
```

Im nächsten Durchgang wird nun mit der Gleichung (3) für die Spule 2 derjenige Polzahn mit dem geringsten Winkelfehler Wf bzw. mit dem größten Winkelfehler-Cosinuswert Wfmax ermittelt.

```
Wfmax = max(|Wf(1)|,|Wf(2)|,|Wf(3)|,…) = 0,966
```

Winkelfehlervergleich:

| | | |
|---|---|---|
| |Wf(1)|= Wfmax: | 0,966 = 0,966: | Bedingung erfüllt. |
| |Wf(2)|= Wfmax: | 0,707 ≠ 0,966: | Bedingung nicht erfüllt. |
| |Wf(3)|= Wfmax: | 0,259 ≠ 0,966: | Bedingung nicht erfüllt. |
| |Wf(4)|= Wfmax: | 0,259 ≠ 0,966: | Bedingung nicht erfüllt. |
| |Wf(5)|= Wfmax: | 0,707 ≠ 0,966: | Bedingung nicht erfüllt. |
| |Wf(6)|= Wfmax: | 0,966 = 0,966: | Bedingung erfüllt. |
| |Wf(7)|= Wfmax: | 0,966 = 0,966: | Bedingung erfüllt. |
| |Wf(8)|= Wfmax: | 0,707 ≠ 0,966: | Bedingung nicht erfüllt. |
| |Wf(9)|= Wfmax: | 0,259 ≠ 0,966: | Bedingung nicht erfüllt. |
| |Wf(10)|= Wfmax: | 0,259 ≠ 0,966: | Bedingung nicht erfüllt. |
| |Wf(11)|= Wfmax: | 0,707 ≠ 0,966: | Bedingung nicht erfüllt. |
| |Wf(12)|= Wfmax: | 0,966 = 0,966: | Bedingung erfüllt. |

Ergebnis des Vergleichs:

Die Spule S2 kann auf Zahn Z6 gewickelt werden.
Der ermittelte Wert ist positiv, so dass die Spule 2 rechts herum gewickelt wird. Damit ist die zweite Zeile der Wickeltabelle in Figur 9 festgelegt.

Die gleichen Berechnungen werden nunmehr für die übrigen Spulen 3 bis 27 in gleicher Weise mit den Gleichungen (2) und (3) durchgeführt und damit wird zeilenweise die Wickeltabelle in Figur 7 erstellt.

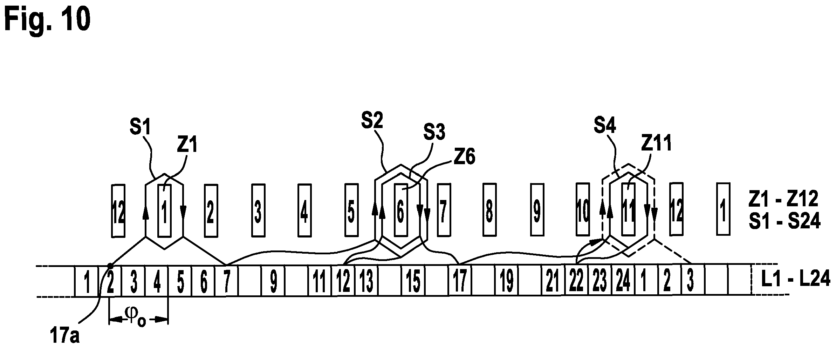

In Figur 10 wird die Herstellung der Spulen in einem ersten Abschnitt für die Spulen 1 bis 4 dargestellt und beschrieben.

Der Wickeldraht 17 wird dabei zunächst mit seinem Anfang 17a an Lamelle L2 kontaktiert. Er wird von dort zum Polzahn Z1 geführt und die Spule S1 wird rechts herum auf den Polzahn Z1 gewickelt. Das Spulenende wird mit der Lamelle L7 kontaktiert. Von dort wird nun die Spule S2 auf den Polzahn Z6 rechts herum gewickelt und das Spulenende auf Lamelle L12 gelegt. Von dort wird auch die Spule S3 ebenfalls rechts herum auf den Polzahn Z6 gewickelt und das Spulenende auf Lamelle L17 gelegt. Von dort wird die Spule S4 rechts herum auf den Polzahn Z11 gewickelt und das Spulenende mit der Lamelle L22 kontaktiert. Von Lamelle L22 wird der Spulendraht durch den angedeuteten Pfeil zum Spulenanfang der Spule 6 übergeleitet und die Wickeltabelle wird in gleicher Weise wie in Figur 4 des ersten Ausführungsbeispieles vom Wickelautomaten abgearbeitet, bis sämtliche Spulen auf dem Läufer der Maschine durchgewickelt sind.

Die Erfindung ist nicht auf die dargestellten Ausführungsbeispiele beschränkt, da sich im Rahmen der folgenden Bedingungen

$$P > 1 < z \quad \text{für die Polpaarzahl,}$$
$$z \neq 2p \,\#\, 3p \quad \text{für die Zähnezahl,}$$
$$M = s/z \quad \text{für den Multiplikator und}$$
$$|Y - l/p| \leq 0{,}5 \quad \text{für die Lamellenschrittweite}$$

eine Vielzahl von Kombinationen zur Realisierung der Erfindung ergibt.

Außerdem kann zur Ermittlung des elektrischen Winkelfehlers der Spulen auf den jeweiligen Polzähnen an Stelle des Cosinuswertes in der Gleichung (2) auch der Sinuswert verwendet werden. Ebenso kann der auf die Polteilung bezogene elektrische Winkelfehler auch als Bogenmaß ermittelt werden, wenn in der Gleichung (2) der Cosinus weggelassen wird. Ein auf den ganzen Umfang bezogener absoluter Winkelfehler der Spulen ergibt sich durch Weglassen von 'p' in der Gleichung (2), was ebenfalls im Rahmen der Erfindung möglich ist. Dabei muss jedoch der Winkelfehler mit der Polzahl, also mit modular $2\pi/2p$, korrigiert werden. Der Winkelfehler lässt sich schließlich auch in Graden ermitteln, wenn der Term '$2\pi$' durch '360°' ersetzt und das Ergebnis mit mod. 360°/2p korrigiert wird. In jedem Fall muss jedoch zur Erstellung der Wickeltabelle für jede Spule der Polzahn mit dem geringsten Winkelfehler ermittelt werden.

Bei Wickelmaschinen mit zwei um 180° zueinander versetzten sogenannten Flyern oder Nadeln kann im Falle einer geraden Spulenzahl s gemäß Figur 3 und 9 auch jeweils die halbe Anzahl der Spulen durchgewickelt werden; das heißt, dass die obere und untere Hälfte der erfindungsgemäß erstellten Wickeltabelle gleichzeitig von je einem Flyer bzw. einer Nadel abgearbeitet wird.

**Patentansprüche**

1. Verfahren zur Herstellung der Läuferwicklung einer elektrischen Maschine, vorzugsweise eines Gleichstrommotors (10), mit mindestens vier Erregerpolen **(2P)** im Stator (11) und mit einem Kommutatorläufer (13), der eine Anzahl von Nuten und Polzähnen (Z) am Umfang aufweist, die von der Anzahl der Erregerpole abweicht, und mit einer Anzahl von Einzelzahnspulen (S) und gleich großer Anzahl von Kommutatorlamellen (L), die mindestens doppelt so groß wie die Anzahl der Polzähne **(Z)** ist, wobei die Einzelzahnspulen mit einem Wickeldraht (17) von einem Wickelautomaten auf die Polzähne vorzugsweise gleichmäßig verteilt gewickelt werden, insbesondere durchgewickelt werden, **wobei** nach dem Befestigen des Wicklungsdrahtes (17) an einer Anfangslamelle (La) auf einen ersten Polzahn (Z1) eine erste Spule (S1) mit einem wählbaren Winkelversatz ($\varphi_0$) zu ihrer Anfangslamelle (La) und mit vorgegebener Windungszahl gewickelt wird, dass dann der Wickeldraht (17) mit einer fest vorgegebenen Lamellenschrittweite (Y) an einer weiteren Kommutatorlamelle (L) als Endlamelle (Le) befestigt wird, **wobei der wählbare Winkelversatz ($\varphi_0$) der ersten Spule kleiner oder gleich der Lamellenschrittweite (Y) ist,** dass danach sukzessive von jeder Kommutatorlamelle (L) aus eine Spule (S) jeweils auf denjenigen Polzahn (Z) mit dem geringsten auf eine Polteilung bezogenen elektrischen Winkelfehler (Wf) zu dem gewählten Winkelversatz ($\varphi_0$) gewickelt **wird, wobei der Winkelfehler eine Abweichung der zur Verfügung stehenden Polzähne (Z) zu den optimalen auf die Erreger-Polteilung der Maschine bezogenen Positionen bezeichnet,** und dass danach der Wickeldraht (17) mit der vorgegebenen Lamellenschrittweite (Y) an einer weiteren Lamelle (L) kontaktiert wird, bis sämtliche Einzelzahnspulen (S) auf den Polzähnen (Z) gewickelt sind, wobei **für jeweils die nächste zu wickelnde Spule (S) zunächst für jeden der Polzähne (Z) des Läufers (13) der elektrische Winkelfehler (Wf) ermittelt wird, dass**

sodann die Absolutwerte der ermittelten Winkelfehler miteinander verglichen werden, dass durch diesen Vergleich schließlich der Polzahn (Z) mit dem kleinsten elektrischen Winkelfehler (Wf) ermittelt und die nächste Spule (S) auf diesen Polzahn gewickelt wird, wobei für jeden Polzahn (Z) der elektrische Winkelfehler (Wf) vorzugsweise als Cosinuswert des zur Polpaarzahl (p) periodischen Winkelfehlers jeweils nach der Gleichung (2) **Wf(j) = cos [2$\pi$ * p/z * (j-**Lai/M)] ermittelt wird, wobei der Multiplikator M die Anzahl der Spulen (S) pro Polzahn (Z) und j der **jeweilige** Polzahn (Z) ist, wobei die für jede Spule (S) jeweils **ermittelnden** Cosinuswerte der elektrischen **Winkelfehler** (Wf) miteinander **verglichen werden,** dass die jeweilige Spule (S) **auf** den Polzahn (Z) mit dem kleinsten **absoluten** Winkelfehler (Wf), vorzugsweise mit dem größten **absoluten** Winkelfehler-Cosinuswert (Wfmax) gewickelt wird, und dass der Wickelsinn der Spulen (S) durch das Vorzeichen des Winkelfehler-Cosinuswertes bestimmt wird, wobei bei gleichen größten Winkelfehler-Cosinuswerten (Wfmax) für mehrere Polzähne (Z) die nächste Spule (S) auf einen Polzahn (Z) gewickelt wird, der noch nicht die vorbestimmte Anzahl (M) von Spulen (S) trägt.

**2.** Verfahren nach Anspruch 1, **dadurch gekennzeichnet, dass** die Lamellenschrittweite (Y) der Einzelzahnspulen (S) in Abhängigkeit von der Lamellenzahl (I) und der Polpaarzahl (p) des Stators (11) so vorgegeben wird, dass sie die Gleichung |Y-I/p| $\leq$ 0,5 erfüllt.

**3.** Verfahren nach Anspruch 1 oder 2, **dadurch gekennzeichnet, dass** das Ende der ersten Einzelzahnspule (S) mit derjenigen Lamelle (Le1) kontaktiert wird, die zuvor nach der Gleichung Lei = (La1+Y)mod I ermittelt wurde, wobei diese Lamelle (Le1) für die nächste zu wickelnde Einzelzahnspule (S2) die Lamelle (La2) für deren Spulenanfang bildet, und dass danach jede weitere Spule (S) mit der Lamellenschrittweite (Y) mit den Lamellen (L) des Kommutators (16) kontaktiert wird.

**4.** Verfahren nach **Anspruch 1, dadurch gekennzeichnet, dass** die Spule (S) auf denjenigen Polzahn (Z) gewickelt wird, der im Bereich zwischen Anfangslamelle (La) und Endlamelle (Le) dieser Spule (S) liegt.

**5.** Verfahren nach einem der vorherigen Ansprüche, **dadurch gekennzeichnet, dass** mehrere, vorzugsweise alle Einzelzahnspulen (S) nacheinander ohne Unterbrechung des Wickeldrahtes (17) durchgewickelt werden, wobei Anfang und Ende der **Einzelzahnspulen in** ein und dieselbe Wickelrichtung mit der Lamellenschrittweite (Y) an den jeweiligen Kommutatorlamellen (L) kontaktiert werden.

**6.** Verfahren nach einem der vorherigen Ansprüche, **dadurch gekennzeichnet, dass** der Wickeldraht (17) zwischen der Anfangs- bzw. Endlamelle (La, Le) und einer Spule (S) zwischen **zwei Polzähnen (Z)** hindurch zur Ankerrückseite und von dort insbesondere zwischen zwei weitere Polzähne (Z) hindurch zur Vorderseite zurück und dann zur Spule (S) bzw. zur Lamelle (L) geführt wird.

**7.** Verfahren nach einem der vorherigen Ansprüche, **dadurch gekennzeichnet, dass** die Anfangs- und Endlamelle (La, Le) sowie der Polzahn (Z) und der Wickelsinn der Spulen (S) von einem Rechner in Form einer Wickeltabelle ermittelt werden, welche in einen Wickelautomaten eingegeben und von diesem beim Wickeln der Spulen abgearbeitet wird.

**8.** Verfahren nach einem der **vorherigen Ansprüche, dadurch gekennzeichnet, dass** für eine vierpolige elektrische Maschine auf deren Läufer (13) von einem Wickelautomaten fünfzehn Einzelzahnspulen (S) nacheinander auf fünf Polzähne (Z) durchgewickelt werden und dass die Einzelzahnspulen bei einer Lamelleschrittweite (Y) von acht Lamellen mit fünfzehn Lamellen (L) eines Kommutators (16) kontaktiert werden.

**9.** Verfahren nach einem der Ansprüche 1-7 **dadurch gekennzeichnet, dass** für eine sechspolige elektrische Maschine auf deren Läufer (13) von einem Wickelautomaten zwanzig Einzelzahnspulen (S) nacheinander auf zehn Polzähne (Z) durchgewickelt werden und dass die Einzelzahnspulen bei einer Lamelleschrittweite (Y) von sieben Lamellen mit zwanzig Lamellen (L) eines Kommutators (16) kontaktiert werden.

**10.** Verfahren nach einem der Ansprüche 1-7 **dadurch gekennzeichnet, dass** für eine achtpolige elektrische Maschine auf deren Läufer (13) von einem Wickelautomaten siebenundzwanzig Einzelzahnspulen (S) nacheinander auf neun Polzähne (Z) durchgewickelt werden und dass die Einzelzahnspulen bei einer Lamelleschrittweite (Y) von sieben Lamellen mit siebenundzwanzig Lamellen (L) eines Kommutators (16) kontaktiert werden.

**11.** Verfahren nach einem der Ansprüche 1-7 **dadurch gekennzeichnet, dass** für eine zehnpolige elektrische Maschine auf deren Läufer (13) von einem Wickelautomaten vierundzwanzig Einzelzahnspulen (S) nacheinander auf zwölf Polzähne (Z) durchgewickelt werden und dass die Einzelzahnspulen bei einer Lamelleschrittweite (Y) von fünf Lamellen mit vierundzwanzig Lamellen (L) eines Kommutators (16) kontaktiert werden.

**Claims**

1. Method for producing the rotor winding of an electrical machine, preferably of a DC motor (10), having at least four exciter poles (2P) in the stator (11) and having a commutator rotor (13) which has a number of slots and pole teeth (Z) over the circumference which differs from the number of exciter poles, and having a number of individual tooth-wound coils (S) and the same number of commutator laminates (L) which is at least twice as high as the number of pole teeth (Z), wherein the individual tooth-wound coils are wound, preferably in a uniformly distributed manner, in particular continuously wound, onto the pole teeth with a winding wire (17) by an automatic winding machine, wherein, after the winding wire (17) is fastened to a start laminate (La), a first coil (S1) is wound onto a first pole tooth (Z1) with a selectable angle offset ($\varphi_0$) in relation to its start laminate (La) and with a prespecified number of turns, that the winding wire (17) is then fastened to a further commutator laminate (L) as end laminate (Le) at a fixedly prespecified laminate step width (Y), wherein the selectable angle offset ($\varphi_0$) of the first coil is less than or equal to the laminate step width (Y), that, successively from each commutator laminate (L), one coil (S) is then in each case wound onto that pole tooth (Z) with the lowest electrical angle error (Wf) in relation to a pole pitch to form the selected angle offset ($\varphi_0$), wherein the angle error identifies a deviation in the available pole teeth (Z) from the optimum positions in relation to the exciter pole pitch of the machine, and that the winding wire (17) is then contact-connected to a further laminate (L) at the prespecified laminate step width (Y) until all of the individual tooth-wound coils (S) are wound onto the pole teeth (Z), wherein the electrical angle error (Wf) is ascertained initially for each of the pole teeth (Z) of the rotor (13) for in each case the next coil (S) to be wound, that the absolute values of the ascertained angle errors are then compared with one another, that finally the pole tooth (Z) with the smallest electrical angle error (Wf) is ascertained by this comparison and the next coil (S) is wound onto this pole tooth, wherein, for each pole tooth (Z), the electrical angle error (Wf) is ascertained, preferably as a cosine value of the periodic angle error relative to the number (p) of pole pairs, in each case in accordance with the equation (2) Wf(j) = cos [$2\pi$*p/z*(j-Lai/M)], where the multiplier M is the number of coils (S) per pole tooth (Z) and j is the respective pole tooth (Z), wherein the cosine values of the electrical angle errors (Wf) respectively ascertained for each coil (S) are compared with one another, that the respective coil (S) is wound onto the pole tooth (Z) with the smallest absolute angle error (Wf), preferably with the largest absolute angle error cosine value (Wfmax), and that the winding sense of the coils (S) is determined by the mathematical sign of the angle error cosine value, wherein, if the greatest angle error cosine values (Wfmax) for a plurality of pole teeth (Z) are the same, the next coil (S) which does not yet have the predetermined number (M) of coils (S) is wound onto a pole tooth (Z).

2. Method according to Claim 1, **characterized in that** the laminate step width (Y) of the individual tooth coils (S) is prespecified depending on the number (1) of laminates and the number (p) of pole pairs of the stator (11) such that the equation |$Y$-$l$/$p$|≤0.5 is satisfied.

3. Method according to Claim 1 or 2, **characterized in that** the end of the first individual tooth-wound coil (S) is contacted by that laminate (Le1) which was previously ascertained in accordance with the equation Le1 = (La1+Y)mod l, wherein this laminate (Le1) forms the laminate (La2) for the coil start for the next individual tooth-wound coil (S2) to be wound, and **in that** each further coil (S) is then contact-connected with the laminates (L) of the commutator (16) at the laminate step width (Y).

4. Method according to Claim 1, **characterized in that** the coil (S) is wound onto that pole tooth (Z) which is situated in the region between the start laminate (La) and the end laminate (Le) of this coil (S).

5. Method according to one of the preceding claims, **characterized in that** a plurality of, preferably all of, the individual tooth-wound coils (S) are continuously wound in succession without interruption of the winding wire (17), wherein the start and the end of the individual tooth-wound coils are contact-connected to the respective commutator laminates (L) in one and the same winding direction at the laminate step width (Y).

6. Method according to one of the preceding claims, **characterized in that** the winding wire (17) between the start or end laminate (La, Le) and a coil (S) is guided between two pole teeth (Z) to the armature rear side and from there, in particular between two further pole teeth (Z), back to the front side and then to the coil (S) or to the laminate (L).

7. Method according to one of the preceding claims, **characterized in that** the start and end laminate (La, Le) and the pole tooth (Z) and the winding sense of the coils (S) are ascertained by a computer in the form of a winding table which is input into an automatic winding machine and processed by the said automatic winding machine during winding of the coils.

**8.** Method according to one of the preceding claims, **characterized in that**, for a four-pole electrical machine, fifteen individual tooth-wound coils (S) are continuously wound onto the rotor (13) of the said four-pole electrical machine in succession onto five pole teeth (Z) by an automatic winding machine, and **in that** the individual tooth-wound coils are contact-connected with fifteen laminates (L) of a commutator (16) given a laminate step width (Y) of eight laminates.

**9.** Method according to one of Claims 1 to 7, **characterized in that**, for a six-pole electrical machine, twenty individual tooth-wound coils (S) are continuously wound onto the rotor (13) of the said six-pole electrical machine in succession onto ten pole teeth (Z) by an automatic winding machine, and **in that** the individual tooth-wound coils are contact-connected with twenty laminates (L) of a commutator (16) given a laminate step width (Y) of seven laminates.

**10.** Method according to one of Claims 1 to 7, **characterized in that**, for an eight-pole electrical machine, twenty-seven individual tooth-wound coils (S) are continuously wound onto the rotor (13) of the said eight-pole electrical machine in succession onto nine pole teeth (Z) by an automatic winding machine, and **in that** the individual tooth-wound coils are contact-connected with twenty-seven laminates (L) of a commutator (16) given a laminate step width (Y) of seven laminates.

**11.** Method according to one of Claims 1 to 7, **characterized in that**, for a ten-pole electrical machine, twenty-four individual tooth-wound coils (S) are continuously wound onto the rotor (13) of the said ten-pole electrical machine in succession onto twelve pole teeth (Z) by an automatic winding machine, and **in that** the individual tooth-wound coils are contact-connected with twenty-four laminates (L) of a commutator (16) given a laminate step width (Y) of five laminates.

**Revendications**

**1.** Procédé de fabrication de l'enroulement d'induit d'une machine électrique, de préférence d'un moteur à courant continu (10), qui présente au moins quatre pôles d'excitateur **(2P)** dans le stator (11) et un induit (13) à commutateurs dont la périphérie présente un nombre de rainures et de dents polaires (Z) différent du nombre des pôles d'excitateur, le nombre de bobines individuelles (S) de dent et le même nombre de lamelles (L) de commutation étant au moins doubles du nombre de dents polaires **(Z),** un fil de bobinage (17) étant bobiné de préférence de manière uniformément répartie, en particulier bobiné complètement, sur les bobines individuelles des dents polaires par un automate d'enroulement, une première bobine (S1) étant bobinée sur une première dent polaire (Z1) à un décalage angulaire ($\phi_0$) sélectionné par rapport à sa lamelle initiale (La) et à un nombre d'enroulements prédéterminé après la fixation du fil de bobinage (17) à une lamelle initiale (La), que le fil de bobinage (17) soit fixé à une largeur de pas (Y) de lamelle prédéterminée fixement sur une autre lamelle (L) de commutation formant une lamelle d'extrémité (Le), **le décalage angulaire ($\phi_0$) sélectionné pour la première bobine étant inférieur ou égal à la largeur de pas (Y) de lamelle,** qu'ensuite, partant de chaque lamelle (L) de commutation, une bobine (S) soit bobinée sur la dent polaire (Z) qui présente la plus petite erreur angulaire électrique (Wf), rapportée à une répartition des pôles, par rapport au décalage angulaire ($\phi_0$) sélectionné, **le décalage angulaire désignant l'écart entre les dents polaires (Z) disponibles et les positions optimales par rapport à la répartition des pôles d'excitateur de la machine,** et que le fil de bobinage (17) soit ensuite mis en contact à la largeur prédéterminée (Y) de pas de lamelle avec une autre lamelle (L) jusqu'à ce que toutes les bobines individuelles (S) de lamelle soient bobinées sur les dents polaires (Z), pour chaque bobine (S) qui doit être bobinée ensuite, l'erreur angulaire électrique (Wf) étant d'abord déterminée pour chacune des dents polaires (Z) de l'induit (13), que les valeurs absolues des erreurs angulaires ainsi déterminées **soient alors comparées mutuellement, qu'à partir de cette comparaison la dent polaire (Z) qui présente la plus petite erreur angulaire électrique (Wf) soit enfin determinée, la bobine (S) suivante étant bobinée sur cette dent polaire, l'erreur angulaire électrique (Wf) étant déterminée pour chaque dent polaire (Z) en tant que valeur du cosinus de l'erreur angulaire périodique par rapport au nombre (p) de paires de dents, selon l'équation (2) Wf(j) = cos ($2\pi$ * p/z * (j-Lai/M)), le multiplicateur M étant le nombre de bobines (S) par dent polaire (Z) et j étant la dent polaire (Z), les valeurs de cosinus de l'erreur angulare électrique déterminées pour chaque bobine (S) étant comparées les unes aux autres, que chaque bobine (S) soit bobinée sur la dent polaire (Z) qui présente la plus petite erreur angulaire absolue (Wf) et de préférence sur celle qui présente la plus grande valeur absolue de cosinus (Wfmax), et que le sens d'enroulement des bobines (S)**

soit défini par le signe de la valeur du cosinus de l'erreur angulaire et lorsque les plus grandes valeurs **(Wfmax) du cosinus de l'erreur angulaire sont identiques pour plusieurs dents polaires (Z), la bobine (S) suivante étant bobinée sur une dent polaire (Z) qui ne porte pas encore le nombre prédéterminé (M) de bobines (S).**

2. Procédé selon la revendication 1, **caractérisé en ce que** la largeur (Y) de pas de lamelle des bobines individuelles (S) de dent est prédéterminé en fonction du nombre (I) de lamelles et du nombre (p) de paires de pôles du stator (11) de telle sorte que la relation (valeur absolue de $|Y-I/p| \leq 0,5$ soit satisfaite.

3. Procédé selon les revendications 1 ou 2, **caractérisé en ce que** l'extrémité de la première bobine individuelle (S) de dent est en contact avec la lamelle (Le1) qui a été déterminée précédemment selon l'équation Le1 = (La1+Y)mod I, cette lamelle (Le1) formant pour la bobine individuelle (S2) de dent suivante formant la lamelle (La2) pour son début de bobine et **en ce qu'**ensuite, chaque autre bobine (S) soit mise en contact à la largeur (Y) de pas de lamelle avec les lamelles (L) du commutateur (16).

4. Procédé selon **la revendication 1, caractérisé en ce que** la bobine (S) est bobinée sur la dent polaire (Z) située entre la lamelle initiale (La) et la lamelle finale (Le) de cette bobine (S).

5. Procédé selon l'une des revendications précédentes, **caractérisé en ce que** plusieurs et de préférence toutes les bobines individuelles (S) de dent sont bobinées complètement l'une à la suite de l'autre sans interrompre le fil de bobinage (17), le début et la fin des **bobines individuelles** de dent étant mis en contact à la largeur (Y) de pas de lamelle avec les lamelles (L) de commutateur dans un seul et même sens de bobinage.

6. Procédé selon l'une des revendications précédentes, **caractérisé en ce qu'**entre la lamelle initiale ou la lamelle finale (La, Le) d'une bobine (S), le fil de bobinage (17) est guidé sans interruption vers le côté arrière de l'induit et de là en particulier entre deux autres dents polaires (Z) en retour vers le côté avant et de là vers la bobine (S) ou la lamelle (L).

7. Procédé selon l'une des revendications précédentes, **caractérisé en ce que** la lamelle initiale et la lamelle finale (La, Le) ainsi que la dent polaire (Z) et le sens de bobinage des bobines (S) sont déterminés par un calculateur sous la forme d'un tableau de bobinage qui est introduit dans un automate de bobinage et qui est ensuite traité par ce dernier lors du bobinage des bobines.

8. Procédé selon l'une des **revendications précédentes, caractérisé en ce que** pour une machine électrique à quatre pôles, quinze bobines individuelles (S) de dent sont bobinées successivement et sans interruption sur cinq dents polaires (Z) de son induit (13) par un automate de bobinage et **en ce que** si la largeur (Y) de pas de lamelle est de huit lamelles, les bobines individuelles de dent sont mises en contact avec quinze lamelles (L) d'un commutateur (16).

9. Procédé selon l'une des revendications 1 à 7, **caractérisé en ce que** pour une machine électrique à six pôles, vingt bobines individuelles (S) de dent sont bobinées successivement et sans interruption sur dix dents polaires (Z) de son induit (13) par un automate de bobinage et **en ce que** si la largeur (Y) de pas de lamelle est de sept lamelles, les bobines individuelles de dent sont mises en contact avec vingt lamelles (L) d'un commutateur (16).

10. Procédé selon l'une des revendications 1 à 7, **caractérisé en ce que** pour une machine électrique à huit pôles, vingt sept bobines individuelles (S) de dent sont bobinées successivement et sans interruption sur neuf dents polaires (Z) de son induit (13) par un automate de bobinage et **en ce que** si la largeur (Y) de pas de lamelle est de sept lamelles, les bobines individuelles de dent sont mises en contact avec vingt sept lamelles (L) d'un commutateur (16).

11. Procédé selon l'une des revendications 1 à 7, **caractérisé en ce que** pour une machine électrique à dix pôles, vingt quatre bobines individuelles (S) de dent sont bobinées successivement et sans interruption sur douze dents polaires (Z) de son induit (13) par un automate de bobinage et **en ce que** si la largeur (Y) de pas de lamelle est de cinq lamelles, les bobines individuelles de dent sont mises en contact avec vingt quatre lamelles (L) d'un commutateur (16).

## Fig. 1

## Fig. 2

## Fig. 3

| Spule | La | Polzahn | re / li | Le | |
|-------|-----|---------|---------|-----|-------|
| 1 | 2 | 1 | re | 9 | |
| 2 | 9 | 3 | li | 16 | |
| 3 | 16 | 8 | re | 3 | Fig. a |
| 4 | 3 | 10 | li | 10 | |
| 5 | 10 | 5 | re | 17 | |
| 6 | 17 | 7 | li | 4 | |
| 7 | 4 | 2 | re | 11 | |
| 8 | 11 | 4 | li | 18 | Fig. b |
| 9 | 18 | 9 | re | 5 | |
| 10 | 5 | 1 | li | 12 | |
| 11 | 12 | 6 | re | 19 | |
| 12 | 19 | 8 | li | 6 | |
| 13 | 6 | 3 | re | 13 | Fig. c |
| 14 | 13 | 5 | li | 20 | |
| 15 | 20 | 10 | re | 7 | |
| 16 | 7 | 2 | li | 14 | |
| 17 | 14 | 7 | re | 1 | |
| 18 | 1 | 9 | li | 8 | Fig. d |
| 19 | 8 | 4 | re | 15 | |
| 20 | 15 | 6 | li | 2 | |

## Fig. 4a

## Fig. 4b

S6 Z7 S9 Z9 S10 S7 Z2 S8 Z4
Z1

7    9    1   2   4

Z1 - Z10
S6 - S10

17 18    4 5   11 12   18   L1 - L20

17

## Fig. 4c

S11
S14 S12 S15
Z5 Z6 Z8 Z10 S13 Z3

5   6   8   10   3

Z1 - Z10
S11 - S15

12 13   19 20   6 7   13   L1 - L20

17

## Fig. 4d

S17
S16 S19 S20 Z7 S18
Z2 Z4 Z6 Z9

2   4   6  7   9

Z1 - Z10
S16 - S20

7 8   14 15   1 2   8   L1 - L20

17b   17

# Fig. 5

| Spule | La | Polzahn | re / li | Le |
|-------|-----|---------|---------|-----|
| 1 | 3 | 1 | re | 11 |
| 2 | 11 | 5 | li | 4 |
| 3 | 4 | 5 | li | 12 |
| 4 | 12 | 4 | re | 5 |
| 5 | 5 | 3 | li | 13 |
| 6 | 13 | 3 | li | 6 |
| 7 | 6 | 2 | re | 14 |
| 8 | 14 | 1 | li | 7 |
| 9 | 7 | 1 | li | 15 |
| 10 | 15 | 5 | re | 8 |
| 11 | 8 | 4 | li | 1 |
| 12 | 1 | 4 | li | 9 |
| 13 | 9 | 3 | re | 2 |
| 14 | 2 | 2 | li | 10 |
| 15 | 10 | 2 | li | 3 |

# Fig. 6

# Fig. 7

| Spule | La | Polzahn | re / li | Le |
|-------|-----|---------|---------|-----|
| 1 | 3 | 1 | re | 10 |
| 2 | 10 | 9 | li | 17 |
| 3 | 17 | 9 | li | 24 |
| 4 | 24 | 8 | re | 4 |
| 5 | 4 | 7 | li | 11 |
| 6 | 11 | 7 | li | 18 |
| 7 | 18 | 6 | re | 25 |
| 8 | 25 | 5 | li | 5 |
| 9 | 5 | 5 | li | 12 |
| 10 | 12 | 4 | re | 19 |
| 11 | 19 | 3 | li | 26 |
| 12 | 26 | 3 | li | 6 |
| 13 | 6 | 2 | re | 13 |
| 14 | 13 | 1 | li | 20 |
| 15 | 20 | 1 | li | 27 |
| 16 | 27 | 9 | re | 7 |
| 17 | 7 | 8 | li | 14 |
| 18 | 14 | 8 | li | 21 |
| 19 | 21 | 7 | re | 1 |
| 20 | 1 | 6 | li | 8 |
| 21 | 8 | 6 | li | 15 |
| 22 | 15 | 5 | re | 22 |
| 23 | 22 | 4 | li | 2 |
| 24 | 2 | 4 | li | 9 |
| 25 | 9 | 3 | re | 16 |
| 26 | 16 | 2 | li | 23 |
| 27 | 23 | 2 | li | 3 |

EP 1 834 398 B1

**Fig. 8**

# Fig. 9

| Spule | La | Polzahn | re / li | Le |
|-------|-----|---------|---------|-----|
| 1 | 2 | 1 | re | 7 |
| 2 | 7 | 6 | re | 12 |
| 3 | 12 | 6 | re | 17 |
| 4 | 17 | 11 | re | 22 |
| 5 | 22 | 11 | re | 3 |
| 6 | 3 | 4 | re | 8 |
| 7 | 8 | 4 | re | 13 |
| 8 | 13 | 9 | re | 18 |
| 9 | 18 | 9 | re | 23 |
| 10 | 23 | 2 | re | 4 |
| 11 | 4 | 2 | re | 9 |
| 12 | 9 | 7 | re | 14 |
| 13 | 14 | 7 | re | 19 |
| 14 | 19 | 12 | re | 24 |
| 15 | 24 | 12 | re | 5 |
| 16 | 5 | 5 | re | 10 |
| 17 | 10 | 5 | re | 15 |
| 18 | 15 | 10 | re | 20 |
| 19 | 20 | 10 | re | 1 |
| 20 | 1 | 3 | re | 6 |
| 21 | 6 | 3 | re | 11 |
| 22 | 11 | 8 | re | 16 |
| 23 | 16 | 8 | re | 21 |
| 24 | 21 | 1 | re | 2 |

Fig. 10

**IN DER BESCHREIBUNG AUFGEFÜHRTE DOKUMENTE**

**In der Beschreibung aufgeführte Patentdokumente**

- DE 19757279 C1
- US 4532449 A